(19) **Europäisches Patentamt** **European Patent Office** **Office européen des brevets**

(11) **EP 4 596 610 A1**

(12) **EUROPEAN PATENT APPLICATION**
published in accordance with Art. 153(4) EPC

(43) Date of publication:
06.08.2025 Bulletin 2025/32

(51) International Patent Classification (IPC):
$C08J\ 5/18^{(2006.01)}$    $B29C\ 55/12^{(2006.01)}$
$B32B\ 27/00^{(2006.01)}$    $B32B\ 27/32^{(2006.01)}$
$B65D\ 65/02^{(2006.01)}$    $B65D\ 65/40^{(2006.01)}$
$C08L\ 23/00^{(2006.01)}$    $C08L\ 23/10^{(2006.01)}$
$C08L\ 23/12^{(2006.01)}$

(21) Application number: 23872200.3

(22) Date of filing: 22.09.2023

(52) Cooperative Patent Classification (CPC):
B29C 55/12; B32B 27/00; B32B 27/32;
B65D 65/02; B65D 65/40; C08J 5/18; C08L 23/00;
C08L 23/10; C08L 23/12

(86) International application number:
PCT/JP2023/034582

(87) International publication number:
WO 2024/070975 (04.04.2024 Gazette 2024/14)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 28.09.2022 JP 2022155356
28.09.2022 JP 2022155359
28.09.2022 JP 2022155360
28.09.2022 JP 2022155365
28.09.2022 JP 2022155368

(71) Applicant: RM TOHCELLO CO., LTD.
Tokyo 101-8485 (JP)

(72) Inventors:
- **TAMURA, Takuya**
  **Koga-shi, Ibaraki 306-0213 (JP)**
- **WAKAKI, Hiroyuki**
  **Hamamatsu-shi, Shizuoka 434-0002 (JP)**
- **MASAMOTO, Takumi**
  **Koga-shi, Ibaraki 306-0213 (JP)**
- **SAKURAI, Masayuki**
  **Koga-shi, Ibaraki 306-0213 (JP)**

(74) Representative: **Hoffmann Eitle**
**Patent- und Rechtsanwälte PartmbB**
**Arabellastraße 30**
**81925 München (DE)**

(54) **BIAXIALLY STRETCHED POLYPROPYLENE FILM, FOOD PACKAGING BODY, AND PACKAGED FOOD**

(57) A biaxially oriented polypropylene film (100) including a biaxially oriented film layer (101) containing a propylene-based polymer, in which a crystal long period in a TD direction obtained from small angle X-ray scattering (SAXS) measurement is equal to or less than 28.0 nm.

[Fig.1]

100

EP 4 596 610 A1

**Description**

TECHNICAL FIELD

The present invention relates to a biaxially oriented polypropylene film, a packaging body for food, and a food packaging body.

BACKGROUND ART

A biaxially oriented polypropylene film (hereinafter, also referred to as an OPP film) has an excellent performance balance in terms of workability, water vapor barrier properties, transparency, mechanical strength, stiffness, and the like, and is used, for example, as a packaging film for packaging food.

Examples of the technique relating to a packaging film for food using such an OPP film include those described in Patent Document 1 (Japanese Unexamined Patent Publication No. 2008-73926) and Patent Document 2 (Japanese Unexamined Patent Publication No. 2004-82499).

Patent Document 1 describes a biaxially oriented multilayer polypropylene film which has, on one surface of a biaxially oriented film consisting of a propylene polymer composition containing 75% to 90% by mass of a propylene homopolymer (A) and 25% to 10% by mass of a viscosity imparting agent (D), a layer consisting of a propylene-$\alpha$-olefin random copolymer (C) having a melting point in a range of 125°C to 145°C through a layer consisting of a propylene-based polymer (B) having a melting point of equal to or higher than 155°C, and has, on the other surface of the biaxially oriented film, a layer consisting of a propylene-based polymer (E).

Patent Document 1 describes that the biaxially oriented multilayer polypropylene film can suppress bleeding into the film surface, such as a petroleum resin, and has excellent lamination strength and moisture resistance.

Patent Document 2 describes a multilayer resin film which further includes a polyvinyl alcohol-based resin layer on at least one surface of a biaxially oriented polypropylene-based resin layer containing 10% to 40% by mass of a highly crystallized resin and 6% to 15% by mass of a petroleum resin, in which an oxygen permeability at a relative humidity of 85% RH and a temperature of 23°C is equal to or less than 600 mL/m$^2$·day·MPa, and a water vapor permeability at a relative humidity of 90% RH and a temperature of 40°C is equal to or less than 3.5 g/m$^2$·day·20 $\mu$m.

Patent Document 2 describes that the multilayer resin film has excellent oxygen gas barrier properties and moisture resistance.

RELATED DOCUMENT

PATENT DOCUMENT

    Patent Document 1: Japanese Unexamined Patent Publication No. 2008-73926
    Patent Document 2: Japanese Unexamined Patent Publication No. 2004-82499

SUMMARY OF THE INVENTION

TECHNICAL PROBLEM

In recent years, from the viewpoint of environmental issues, there has been a demand for monomaterialization of packaging materials.

However, in the case of a general biaxially oriented polypropylene film in the related art, thermal dimensional stability may not be sufficient from the viewpoint of suppressing thermal wrinkles of a sealing portion during bag making or from the viewpoint of suppressing thermal elongation during vapor deposition or coating processing. That is, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

The present invention has been made in view of the above circumstances, and provides a biaxially oriented polypropylene film having improved thermal dimensional stability, a packaging body for food, and a food packaging body.

SOLUTION TO PROBLEM

The present inventors have conducted intensive studies to solve the above problems. As a result, it was found that the thermal dimensional stability of the biaxially oriented polypropylene film can be improved by adjusting the crystal long period in the TD direction, which is obtained from the small angle X-ray scattering (SAXS) measurement, to a specific range, and the present invention was completed based on the finding.

That is, according to the present invention, a biaxially oriented polypropylene film, a packaging body for food, and a food packaging body, as shown below, are provided.

[1] A biaxially oriented polypropylene film including a biaxially oriented film layer containing a propylene-based polymer, in which a crystal long period in a TD direction, which is obtained from small angle X-ray scattering (SAXS) measurement, is equal to or less than 28.0 nm.

[2] The biaxially oriented polypropylene film according to [1], in which a noncrystalline thickness in the TD direction obtained from the SAXS measurement is equal to or less than 15.5 nm.

[3] The biaxially oriented polypropylene film according to [1] or [2], in which a crystal thickness in the TD direction obtained from the SAXS measurement is equal to or less than 13.5 nm.

[4] The biaxially oriented polypropylene film according to any one of [1] to [3], in which a crystal ratio at 165°C or lower, which is obtained by differential scanning calorimetry, is equal to or more than 38%.

[5] The biaxially oriented polypropylene film according to any one of [1] to [4], in which a main melting point of the biaxially oriented polypropylene film, which is obtained by differential scanning calorimetry, is equal to or higher than 165°C and equal to or lower than 180°C.

[6] The biaxially oriented polypropylene film according to any one of [1] to [5], in which a melting calorie ($\Delta$H) of an entire film of the biaxially oriented polypropylene film, which is obtained by differential scanning calorimetry, is equal to or more than 100 J/g and equal to or less than 150 J/g.

[7] The biaxially oriented polypropylene film according to any one of [1] to [6], in which a melting calorie ($\Delta$H) of the biaxially oriented polypropylene film at 165°C or lower, which is obtained by differential scanning calorimetry, is equal to or more than 40 J/g.

[8] The biaxially oriented polypropylene film according to any one of [1] to [7], in which a crystallization amount of the biaxially oriented polypropylene film at 165°C or lower is equal to or more than 20%.

[9] The biaxially oriented polypropylene film according to any one of [1] to [8], in which a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

[10] The biaxially oriented polypropylene film according to any one of [1] to [9], in which the biaxially oriented polypropylene film expands in a TD direction after heat treatment at 120°C for 15 minutes in conformity with JIS C2151: 2019.

[11] The biaxially oriented polypropylene film according to any one of [1] to [10], in which the biaxially oriented polypropylene film expands in a TD direction and contracts in an MD direction after heat treatment at 120°C for 15 minutes, in conformity with JIS C2151: 2019.

[12] The biaxially oriented polypropylene film according to any one of [1] to [11], in which a thermal expansion coefficient in a TD direction is equal to or more than 0.1% and equal to or less than 2.0% after heat treatment at 120°C for 15 minutes, in conformity with JIS C2151: 2019.

[13] The biaxially oriented polypropylene film according to any one of [1] to [12], in which a thermal shrinkage rate in an MD direction after heat treatment at 120°C for 15 minutes is equal to or less than 5.0%, in conformity with JIS C2151: 2019.

[14] The biaxially oriented polypropylene film according to any one of [1] to [13], in which a thermal shrinkage rate in a TD direction after heat treatment at 150°C for 15 minutes is equal to or less than 8.5%, in conformity with JIS C2151: 2019.

[15] The biaxially oriented polypropylene film according to any one of [1] to [14], in which a thermal shrinkage rate in an MD direction after heat treatment at 150°C for 15 minutes is equal to or less than 8.0%, in conformity with JIS C2151: 2019.

[16] The biaxially oriented polypropylene film according to any one of [1] to [15], in which in a case where a thermal shrinkage rate in a TD direction and a thermal shrinkage rate in an MD direction after heat treatment at 150°C for 15 minutes are respectively defined as $X_{TD}$ [%] and $X_{MD}$ [%], $X_{TD} + X_{MD}$ is less than 6.0%, in conformity with JIS C2151: 2019.

[17] The biaxially oriented polypropylene film according to any one of [1] to [16], in which a thermal fusion strength in a case where the biaxially oriented polypropylene films are heat-sealed to each other at 200°C is equal to or less than 4.0 N/15 mm.

[18] The biaxially oriented polypropylene film according to any one of [1] to [17], in which a thermal fusion strength in a case where the biaxially oriented polypropylene films are heat-sealed to each other at 170°C is equal to or less than 1.0 *N*/15 mm.

[19] The biaxially oriented polypropylene film according to any one of [1] to [18], in which the propylene-based polymer includes a homopolypropylene (A) and at least one polymer (B) selected from the group consisting of a random polypropylene (B1) and an $\alpha$-olefin copolymer (B2), and an MFR of the polymer (B), which is measured under a condition of 230°C and a load of 2.16 kg, is equal to or more than 0.01 g/10 min and equal to or less than 30 g/10 min, in conformity with ASTM D1238.

[20] The biaxially oriented polypropylene film according to [19], in which an isotactic mesopentad fraction (mmmm) of the homopolypropylene (A) is equal to or more than 96.0%.

[21] The biaxially oriented polypropylene film according to [19] or [20], in which a content of the polymer (B) is equal to or more than 1% by mass and equal to or less than 50% by mass in a case where a total of the biaxially oriented film layer is set to 100% by mass.

[22] The biaxially oriented polypropylene film according to any one of [19] to [21], in which a melting point of the polymer (B) is equal to or higher than 50°C and equal to or lower than 155°C.

[23] The biaxially oriented polypropylene film according to any one of [19] to [22], in which a weight-average molecular weight (Mw) of the polymer (B) is equal to or more than 100,000 and equal to or less than 1,000,000.

[24] The biaxially oriented polypropylene film according to any one of [19] to [23], in which a weight-average molecular weight (Mw)/number-average molecular weight (Mn) of the polymer (B) is equal to or more than 1.5 and equal to or less than 8.0.

[25] The biaxially oriented polypropylene film according to any one of [19] to [24], in which the $\alpha$-olefin copolymer (B2) includes a random copolymer of propylene and one or two or more kinds of $\alpha$-olefins selected from the group consisting of ethylene and $\alpha$-olefins having carbon atoms equal to or more than 4 and equal to or less than 10.

[26] The biaxially oriented polypropylene film according to any one of [1] to [25], further including a surface resin layer on at least one surface of the biaxially oriented film layer.

[27] The biaxially oriented polypropylene film according to [26], in which the surface resin layer contains a homopolypropylene (A).

[28] The biaxially oriented polypropylene film according to [27], in which a content of the homopolypropylene (A) in the surface resin layer is equal to or more than 75% by mass and equal to or less than 100% by mass in a case where the entire surface resin layer is set to 100% by mass.

[29] The biaxially oriented polypropylene film according to any one of [26] to [28], in which a thickness of the surface resin layer is equal to or more than 0.1 $\mu$m and equal to or less than 10.0 $\mu$m.

[30] The biaxially oriented polypropylene film according to any one of [1] to [29], in which a thickness of the biaxially oriented film layer is equal to or more than 5 $\mu$m and equal to or less than 100 $\mu$m.

[31] The biaxially oriented polypropylene film according to any one of [1] to [30], in which a total value ($T_1 + T_2$) of a tensile modulus $T_1$ in an MD direction and a tensile modulus $T_2$ in a TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

[32] The biaxially oriented polypropylene film according to any one of [1] to [31], in which the biaxially oriented polypropylene film is a packaging film for food.

[33] A packaging body for food formed of the biaxially oriented polypropylene film according to any one of [1] to [32].

[34] A food packaging body including the packaging body for food according to [33]; and food in the packaging body for food.

ADVANTAGEOUS EFFECTS OF INVENTION

According to the present invention, it is possible to provide a biaxially oriented polypropylene film, a packaging body for food, and a food packaging body, having improved thermal dimensional stability.

BRIEF DESCRIPTION OF THE DRAWINGS

[FIG. 1] A cross-sectional view schematically showing an example of a structure of a biaxially oriented polypropylene film of the present embodiment.
[FIG. 2] A cross-sectional view schematically showing an example of a structure of a biaxially oriented polypropylene film of the present embodiment.
[FIG. 3] A cross-sectional view schematically showing an example of a structure of a biaxially oriented polypropylene film of the present embodiment.

DESCRIPTION OF EMBODIMENTS

Hereinafter, an embodiment of the present invention will be described using the drawings. Further, the figure is a schematic view, and the dimension ratio thereof does not match the actual dimension ratio. Note that, "to" between numbers in the sentences means "equal to or more than first number and equal to or less than second number" unless otherwise specified.

<Biaxially oriented polypropylene film>

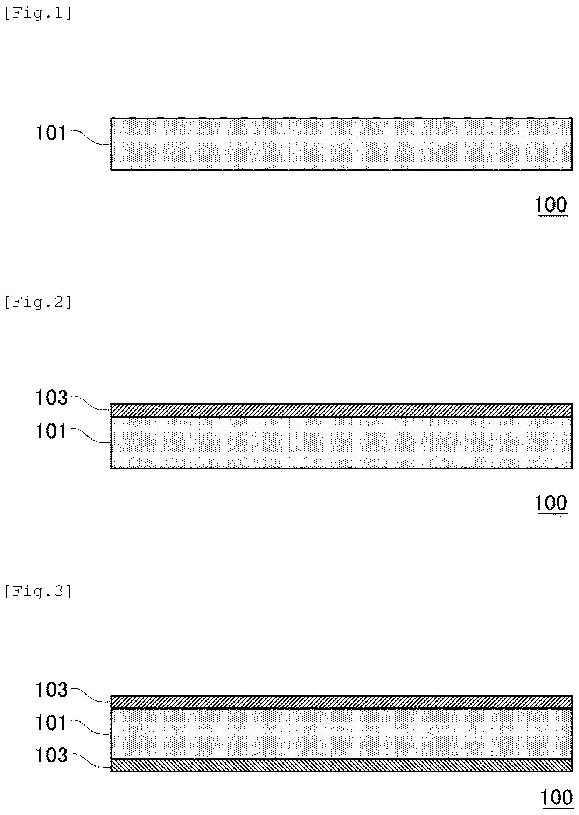

FIGS. 1 to 3 are cross-sectional views schematically showing an example of a structure of a biaxially oriented polypropylene film 100 of the present embodiment.

The biaxially oriented polypropylene film 100 of the present embodiment includes a biaxially oriented film layer 101 containing a propylene-based polymer, and has a crystal long period in the TD direction of equal to or less than 28.0 nm, which is obtained from small angle X-ray scattering (SAXS) measurement.

As described above, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

Here, according to the studies of the present inventors, it was found that the thermal dimensional stability of the biaxially oriented polypropylene film 100 can be improved by setting the crystal long period in the TD direction, which is obtained from the SAXS measurement, to equal to or less than 28.0 nm, and thus the present invention was completed.

That is, according to the biaxially oriented polypropylene film 100 of the present embodiment, thermal dimensional stability can be improved.

In addition, since the biaxially oriented polypropylene film 100 of the present embodiment has improved thermal dimensional stability, thermal wrinkles of a sealing portion during bag making can be suppressed, and as a result, bag making properties can be improved.

The crystal long period $S_2$ of the biaxially oriented polypropylene film 100 in the TD direction, which is obtained from the SAXS measurement, is equal to or less than 28.0 nm, but from the viewpoint of further improving the thermal dimensional stability of the biaxially oriented polypropylene film 100, it is preferably equal to or less than 27.8 nm, more preferably equal to or less than 27.6 nm, still more preferably equal to or less than 27.0 nm, even still more preferably equal to or less than 25.0 nm, even further still more preferably equal to or less than 23.0 nm, even further still more preferably equal to or less than 20.0 nm, even further still more preferably equal to or less than 18.0 nm, and even further still more preferably equal to or less than 15.0 nm, and from the viewpoint of further improving the performance balance of transparency and water vapor barrier properties of the biaxially oriented polypropylene film 100, it is preferably equal to or more than 5.0 nm, more preferably equal to or more than 8.0 nm, still more preferably equal to or more than 10.0 nm, even still more preferably equal to or more than 12.0 nm, even further still more preferably equal to or more than 15.0 nm, even further still more preferably equal to or more than 18.0 nm, even further still more preferably equal to or more than 20.0 nm, even further still more preferably equal to or more than 23.0 nm, even further still more preferably equal to or more than 25.0 nm, and even further still more preferably equal to or more than 27.0 nm.

From the viewpoint of further improving the thermal dimensional stability of the biaxially oriented polypropylene film 100, the crystal long period $S_1$ in the MD direction of the biaxially oriented polypropylene film 100, which is obtained from the SAXS measurement, is preferably equal to or less than 16.5 nm, more preferably equal to or less than 16.0 nm, still more preferably equal to or less than 15.8 nm, and even still more preferably equal to or less than 15.5 nm, and from the viewpoint of further improving the performance balance of the transparency and the water vapor barrier properties of the biaxially oriented polypropylene film 100, the crystal long period $S_1$ is preferably equal to or more than 5.0 nm, more preferably equal to or more than 8.0 nm, still more preferably equal to or more than 10.0 nm, even still more preferably equal to or more than 12.0 nm, and even still more preferably equal to or more than 14.0 nm.

From the viewpoint of further improving the thermal dimensional stability of the biaxially oriented polypropylene film 100, the total value $(S_1 + S_2)$ of the crystal long period $S_1$ in the MD direction and the crystal long period $S_2$ in the TD direction, which are obtained from the SAXS measurement of the biaxially oriented polypropylene film 100, is preferably equal to or less than 44.5 nm, more preferably equal to or less than 44.0 nm, still more preferably equal to or less than 43.5 nm, even more preferably equal to or less than 43.0 nm, even still more preferably equal to or less than 40.0 nm, even further more preferably equal to or less than 35.0 nm, even further still more preferably equal to or less than 32.0 nm, even further still even more preferably equal to or less than 30.0 nm, and even further still even further more preferably equal to or less than 28.0 nm, and from the viewpoint of further improving the performance balance of the transparency and the water vapor barrier properties of the biaxially oriented polypropylene film 100, the total value $(S_1 + S_2)$ is preferably equal to or more than 15.0 nm, more preferably equal to or more than 20.0 nm, still more preferably equal to or more than 25.0 nm, even more preferably equal to or more than 28.0 nm, even still more preferably equal to or more than 30.0 nm, even further more preferably equal to or more than 32.0 nm, even further still more preferably equal to or more than 35.0 nm, even further still even more preferably equal to or more than 38.0 nm, even further still even further more preferably equal to or more than 40.0 nm, and even further still even further even further more preferably equal to or more than 42.0 nm.

The crystal long period $S_1$ of the biaxially oriented polypropylene film 100 in the MD direction and the crystal long period $S_2$ in the TD direction, which are obtained from the SAXS measurement, can be measured by the method described in Examples.

From the viewpoint of further improving the thermal dimensional stability of the biaxially oriented polypropylene film 100, the noncrystalline thickness $S_4$ of the biaxially oriented polypropylene film 100 in the TD direction, which is obtained from the SAXS measurement, is preferably equal to or less than 15.5 nm, more preferably equal to or less than 15.2 nm, still more preferably equal to or less than 15.0 nm, even more preferably equal to or less than 14.5 nm, even still more preferably equal to or less than 13.0 nm, even further preferably equal to or less than 11.0 nm, even further still preferably equal to or less than 10.0 nm, and even further still more preferably equal to or less than 8.0 nm, and from the viewpoint of further improving the performance balance of moldability and transparency of the biaxially oriented polypropylene film 100, the noncrystalline thickness $S_4$ is preferably equal to or more than 3.0 nm, more preferably equal to or more than 5.0 nm, still more preferably equal to or more than 8.0 nm, even more preferably equal to or more than 10.0 nm, and even further still more preferably equal to or more than 13.0 nm.

In a case where the noncrystalline thickness $S_4$ that is likely to move during heating is equal to or less than the above-described upper limit value, the thermal dimensional stability of the biaxially oriented polypropylene film 100 can be further improved.

From the viewpoint of further improving the thermal dimensional stability of the biaxially oriented polypropylene film 100, the noncrystalline thickness $S_3$ of the biaxially oriented polypropylene film 100 in the MD direction, which is obtained from the SAXS measurement, is preferably equal to or less than 9.5 nm, more preferably equal to or less than 9.0 nm, still more preferably equal to or less than 8.8 nm, still more preferably equal to or less than 8.6 nm, and still more preferably equal to or less than 8.0 nm, and from the viewpoint of further improving the performance balance of moldability and transparency of the biaxially oriented polypropylene film 100, the noncrystalline thickness $S_3$ is preferably equal to or more than 3.0 nm, more preferably equal to or more than 5.0 nm, still more preferably equal to or more than 7.0 nm, still more preferably equal to or more than 7.5 nm, and still more preferably equal to or more than 8.0 nm.

From the viewpoint of further improving the thermal dimensional stability of the biaxially oriented polypropylene film 100, the total value $(S_3 + S_4)$ of the noncrystalline thickness $S_3$ of in the MD direction and the noncrystalline thickness $S_4$ in the TD direction of the biaxially oriented polypropylene film 100, which is obtained from the SAXS measurement, is preferably equal to or less than 24.5 nm, more preferably equal to or less than 24.0 nm, still more preferably equal to or less than 23.5 nm, even more preferably equal to or less than 23.0 nm, even still more preferably equal to or less than 20.0 nm, even still more preferably equal to or less than 18.0 nm, even still more preferably equal to or less than 16.0 nm, and even still more preferably equal to or less than 15.0 nm, and from the viewpoint of further improving the performance balance of moldability and transparency of the biaxially oriented polypropylene film 100, the total value $(S_3 + S_4)$ is preferably equal to or more than 5.0 nm, more preferably equal to or more than 8.0 nm, still more preferably equal to or more than 10.0 nm, even still more preferably equal to or more than 13.0 nm, even still more preferably equal to or more than 15.0 nm, even still more preferably equal to or more than 17.0 nm, even still more preferably equal to or more than 20.0 nm, even still more preferably equal to or more than 22.0 nm, and even still more preferably equal to or more than 23.0 nm.

The noncrystalline thickness $S_3$ of the biaxially oriented polypropylene film 100 in the MD direction and the noncrystalline thickness $S_4$ in the TD direction, which are obtained from the SAXS measurement, can be measured by the method described in Examples.

From the viewpoint of further improving the performance balance of moldability and thermal dimensional stability of the biaxially oriented polypropylene film 100, the crystal thickness $S_6$ of the biaxially oriented polypropylene film 100 in the TD direction, which is obtained from the SAXS measurement, is preferably equal to or less than 13.5 nm, more preferably equal to or less than 13.0 nm, still more preferably equal to or less than 12.5 nm, even still more preferably equal to or less than 12.0 nm, even still more preferably equal to or less than 10.0 nm, and even still more preferably equal to or less than 8.0 nm, and from the viewpoint of further improving the performance balance of transparency and water vapor barrier properties of the biaxially oriented polypropylene film 100, the crystal thickness $S_6$ is preferably equal to or more than 3.0 nm, more preferably equal to or more than 5.0 nm, still more preferably equal to or more than 8.0 nm, even still more preferably equal to or more than 10.0 nm, even still more preferably equal to or more than 12.0 nm, and even still more preferably equal to or more than 12.5 nm.

From the viewpoint of further improving the performance balance of moldability and thermal dimensional stability of the biaxially oriented polypropylene film 100, the crystal thickness $S_5$ of the biaxially oriented polypropylene film 100 in the MD direction, which is obtained from the SAXS measurement, is preferably equal to or less than 9.0 nm, more preferably equal to or less than 8.0 nm, and still more preferably equal to or less than 7.5 nm, and from the viewpoint of further improving the performance balance of transparency and water vapor barrier properties of the biaxially oriented polypropylene film 100, the crystal thickness $S_5$ is preferably equal to or more than 3.0 nm, more preferably equal to or more than 5.0 nm, and still more preferably equal to or more than 6.5 nm.

From the viewpoint of further improving the performance balance of moldability and thermal dimensional stability of the biaxially oriented polypropylene film 100, the total value $(S_5 + S_6)$ of the crystal thickness $S_5$ in the MD direction and the crystal thickness $S_6$ in the TD direction of the biaxially oriented polypropylene film 100, which are obtained from the SAXS measurement, is preferably equal to or less than 21.0 nm, more preferably equal to or less than 20.5 nm, still more preferably equal to or less than 20.0 nm, even more preferably equal to or less than 19.0 nm, even still more preferably equal to or less than 18.0 nm, even still more preferably equal to or less than 17.0 nm, even still more preferably equal to or less than 16.0 nm, and even still more preferably equal to or less than 15.5 nm, and from the viewpoint of further improving the performance balance of transparency and water vapor barrier properties of the biaxially oriented polypropylene film 100, the total value $(S_5 + S_6)$ is preferably equal to or more than 5.0 nm, more preferably equal to or more than 8.0 nm, still more preferably equal to or more than 10.0 nm, even still more preferably equal to or more than 13.0 nm, even still more preferably equal to or more than 15.0 nm, even still more preferably equal to or more than 16.0 nm, even still more preferably equal to or more than 18.0 nm, and even still more preferably equal to or more than 19.0 nm.

The crystal thickness $S_5$ in the MD direction and the crystal thickness $S_6$ in the TD direction of the biaxially oriented polypropylene film 100, which are obtained from the SAXS measurement, can be measured by the method described in Examples.

The crystal long period, the noncrystalline thickness, and the crystal thickness of the biaxially oriented polypropylene film 100 can be adjusted by, for example, adjusting the kind and the content ratio of the propylene-based polymer contained in the biaxially oriented film layer 101, the thickness and the stretching ratio of the biaxially oriented film layer 101, the constituent material and the thickness of the surface resin layer 103, and the like.

From the viewpoint of further improving the thermal dimensional stability of the biaxially oriented polypropylene film 100 of the present embodiment, the crystal ratio of the biaxially oriented polypropylene film 100 at 165°C or lower, which is obtained by the differential scanning calorimetry, is preferably equal to or more than 38%.

As described above, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

Here, according to the study by the present inventors, it was found that the amount of crystal components at 165°C or lower affects the thermal dimensional stability. As a result of further studies based on the above findings, the inventors of the present invention have found that the thermal dimensional stability of the biaxially oriented polypropylene film 100 can be improved by setting the crystal ratio at 165°C or lower to equal to or more than 38%.

That is, according to the biaxially oriented polypropylene film 100 of the present embodiment in which the crystal ratio at 165°C or lower is equal to or more than 38%, the thermal dimensional stability can be further improved.

In addition, since the thermal dimensional stability of such a biaxially oriented polypropylene film 100 is further improved, thermal wrinkles of a sealing portion during bag making can be further suppressed, and as a result, the bag-making properties can be further improved.

The crystal ratio of the biaxially oriented polypropylene film 100 at 165°C or lower, which is obtained by differential scanning calorimetry, is preferably equal to or more than 38%, but from the viewpoint of further improving the thermal dimensional stability of the biaxially oriented polypropylene film 100, it is more preferably equal to or more than 39%, still more preferably equal to or more than 40%, still more preferably equal to or more than 41%, still more preferably equal to or more than 42%, and still more preferably equal to or more than 43%, and from the viewpoint of further improving the performance balance of moldability and thermal dimensional stability of the biaxially oriented polypropylene film 100, it is preferably equal to or less than 70%, more preferably equal to or less than 65%, still more preferably equal to or less than 60%, still more preferably equal to or less than 55%, and still more preferably equal to or less than 50%.

The crystal ratio of the biaxially oriented polypropylene film 100 at 165°C or lower can be measured by the method described in Examples.

From the viewpoint of further improving the thermal dimensional stability of the biaxially oriented polypropylene film 100, the main melting point of the biaxially oriented polypropylene film 100, which is obtained by differential scanning calorimetry, is preferably equal to or higher than 165°C, more preferably equal to or higher than 168°C, and still more preferably equal to or higher than 170°C, and from the viewpoint of further improving the performance balance of moldability and thermal dimensional stability of the biaxially oriented polypropylene film 100, the main melting point is preferably equal to or lower than 180°C, more preferably equal to or lower than 178°C, still more preferably equal to or lower than 175°C, and even still more preferably equal to or lower than 173°C.

The main melting point of the biaxially oriented polypropylene film 100 can be measured by the method described in Examples. Here, in the present specification, the peak temperature of the maximum melting peak of the DSC curve is defined as the main melting point.

From the viewpoint of further improving the thermal dimensional stability of the biaxially oriented polypropylene film 100, the melting calorie ($\Delta H$) of the entire film of the biaxially oriented polypropylene film 100, which is obtained by differential scanning calorimetry, is preferably equal to or more than 100 J/g, more preferably equal to or more than 105 J/g, still more preferably equal to or more than 110 J/g, even more preferably equal to or more than 113 J/g, yet even more preferably equal to or more than 115 J/g, and most preferably equal to or more than 117 J/g, and from the viewpoint of further improving the performance balance of moldability and thermal dimensional stability of the biaxially oriented polypropylene film 100, the melting calorie ($\Delta$H) is preferably equal to or less than 150 J/g, more preferably equal to or less than 140 J/g, still more preferably equal to or less than 130 J/g, and even more preferably equal to or less than 128 J/g.

The melting calorie ($\Delta$H) of the entire film of the biaxially oriented polypropylene film 100 can be measured by the method described in Examples. Here, in the present specification, in a case where a plurality of melting peaks appear in the DSC curve, the total area of the plurality of melting peaks is defined as the melting calorie ($\Delta$H).

From the viewpoint of further improving the thermal dimensional stability of the biaxially oriented polypropylene film 100, the melting calorie ($\Delta$H) of the biaxially oriented polypropylene film 100 at 165°C or lower, which is obtained by the differential scanning calorimetry, is preferably equal to or more than 40 J/g, more preferably equal to or more than 42 J/g, still more preferably equal to or more than 43 J/g, even still more preferably equal to or more than 45 J/g, even still more preferably equal to or more than 48 J/g, and even still more preferably equal to or more than 50 J/g, and from the viewpoint of further improving the performance balance of moldability and thermal dimensional stability of the biaxially oriented polypropylene film 100, the melting calorie ($\Delta$H) is preferably equal to or less than 90 J/g, more preferably equal to or less than 85 J/g, still more preferably equal to or less than 80 J/g, even still more preferably equal to or less than 75 J/g, even still more preferably equal to or less than 70 J/g, even still more preferably equal to or less than 65 J/g, and even still more preferably equal to or less than 60 J/g.

The melting calorie ($\Delta$H) of the biaxially oriented polypropylene film 100 at 165°C or lower can be measured by the method described in Examples.

From the viewpoint of further improving the thermal dimensional stability of the biaxially oriented polypropylene film 100, the degree of crystallinity of the biaxially oriented polypropylene film 100, which is obtained by differential scanning calorimetry, is preferably equal to or more than 40%, more preferably equal to or more than 45%, still more preferably equal to or more than 50%, even more preferably equal to or more than 53%, and yet more preferably equal to or more than 55%, and from the viewpoint of further improving the performance balance of moldability and thermal dimensional stability of the biaxially oriented polypropylene film 100, the degree of crystallinity is preferably equal to or less than 80%, more preferably equal to or less than 75%, still more preferably equal to or less than 70%, even more preferably equal to or less than 65%, even still more preferably equal to or less than 62%, and even still more preferably equal to or less than 60%.

The degree of crystallinity of the biaxially oriented polypropylene film 100 can be measured by the method described in Examples.

From the viewpoint of further improving the thermal dimensional stability of the biaxially oriented polypropylene film 100, the crystallization amount of the biaxially oriented polypropylene film 100 at 165°C or lower, which is obtained by differential scanning calorimetry, is preferably equal to or more than 20%, more preferably equal to or more than 22%, still more preferably equal to or more than 23%, and even still more preferably equal to or more than 24%, and from the viewpoint of further improving the performance balance of moldability and thermal dimensional stability of the biaxially oriented polypropylene film 100, the crystallization amount is preferably equal to or less than 40%, more preferably equal to or less than 38%, still more preferably equal to or less than 36%, even still more preferably equal to or less than 35%, and even still more preferably equal to or less than 30%.

The crystallization amount of the biaxially oriented polypropylene film 100 at 165°C or lower can be measured by the method described in Examples.

The above-described characteristics of the biaxially oriented polypropylene film 100 obtained by the differential scanning calorimetry can be adjusted, for example, by adjusting the kind and the content ratio of the propylene-based polymer contained in the biaxially oriented film layer 101, the thickness and the stretching ratio of the biaxially oriented film layer 101, the constituent material and the thickness of the surface resin layer 103, and the like.

The total value ($T_1 + T_2$) of the tensile modulus $T_1$ in the MD direction and the tensile modulus $T_2$ in the TD direction of the biaxially oriented polypropylene film 100, which is measured under the conditions of a measurement temperature of 23°C $\pm$ 2°C, a relative humidity of 50% $\pm$ 5% RH, and a tensile speed of 5 mm/min using a tensile tester in conformity with JIS K7127 (1999), is preferably equal to or more than 3000 MPa, more preferably equal to or more than 3500 MPa, still more preferably equal to or more than 4000 MPa, even still more preferably equal to or more than 5000 MPa, even further still more preferably equal to or more than 6000 MPa, and even further still more preferably equal to or more than 6500 MPa, and is preferably equal to or less than 10000 MPa, more preferably equal to or less than 8000 MPa, and still more preferably equal to or less than 7500 MPa.

In a case where the total value ($T_1 + T_2$) of the tensile modulus $T_1$ in the MD direction and the tensile modulus $T_2$ in the TD direction is equal to or greater than the above-described lower limit value, it is possible to further improve the performance balance of the biaxially oriented polypropylene film 100 in terms of thermal dimensional stability, moldability, water vapor barrier properties, mechanical properties, transparency, bag-making property, handleability, and the like. Further, the stiffness of the biaxially oriented polypropylene film 100 can be improved, and as a result, misregistration of the film during heat sealing can be suppressed, and the occurrence of sealing defects can be suppressed.

That is, in a case where the total value ($T_1 + T_2$) of the tensile modulus $T_1$ in the MD direction and the tensile modulus $T_2$ in the TD direction is equal to or greater than the above-described lower limit value, it is possible to improve the performance balance of the biaxially oriented polypropylene film 100 in terms of the thermal dimensional stability, the moldability, the water vapor barrier property, the mechanical properties, the transparency, the bag-making property, the handleability, and the packaging suitability.

In addition, in a case where the total value ($T_1 + T_2$) of the tensile modulus $T_1$ in the MD direction and the tensile modulus $T_2$ in the TD direction is equal to or less than the above-described upper limit value, troubles such as cutting are less likely to occur during the molding of the biaxially oriented polypropylene film 100, continuous stretching and molding of the film is facilitated, and industrial continuous productivity can be further improved.

Such a tensile modulus is a substitute value for quantitatively measuring the stiffness of the film, and can be adjusted, for example, by adjusting the kind and the content ratio of the propylene-based polymer contained in the biaxially oriented film layer 101, the thickness and the stretching ratio of the biaxially oriented film layer 101, the constituent material and the thickness of the surface resin layer 103, and the like.

In addition, from the viewpoint of further improving the performance balance of the biaxially oriented polypropylene film 100 in terms of thermal dimensional stability, moldability, water vapor barrier properties, mechanical properties, transparency, bag-making properties, handleability, and packaging suitability, the tensile modulus $T_1$ of the biaxially oriented polypropylene film 100 in the MD direction is preferably equal to or more than 1000 MPa, more preferably equal to or more than 1200 MPa, still more preferably equal to or more than 1300 MPa, even still more preferably equal to or more than 1400 MPa, even further still more preferably equal to or more than 1500 MPa, even further still more preferably equal to or more than 1800 MPa, even further still more preferably equal to or more than 2000 MPa, and even further still more preferably equal to or more than 2300 MPa, and from the viewpoint of further improving the performance balance of the biaxially oriented polypropylene film 100 in terms of thermal dimensional stability, antistatic properties, bag-making properties, and packaging suitability, the tensile modulus $T_1$ is preferably equal to or less than 4000 MPa, more preferably equal to or less than 3500 MPa, still more preferably equal to or less than 3000 MPa, even still more preferably equal to or less than 2800 MPa, and even further still more preferably equal to or less than 2600 MPa.

From the viewpoint of further improving the thermal dimensional stability of the biaxially oriented polypropylene film 100, the biaxially oriented polypropylene film 100 of the present embodiment preferably has characteristics of expanding in the TD direction and contracting in the MD direction in a case where the film is subjected to a heat treatment at 120°C for 15 minutes in conformity with JIS C2151: 2019.

As described above, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

Here, according to the study by the present inventors, it was found that, by having characteristics of expanding in the TD direction and contracting in the MD direction in a case of being subjected to a heat treatment at 120°C for 15 minutes, the thermal dimensional stability of the biaxially oriented polypropylene film 100 can be improved.

In general, a roll of the biaxially oriented polypropylene film is unwound in the MD direction, and bag making, coating, vapor deposition, and the like are performed while applying a tension. That is, since the tension is not applied in the TD direction, the thermal shrinkage is likely to be affected in a case where the biaxially oriented polypropylene film is heated, and the thermal wrinkles are likely to occur in the sealing portion. In addition, since tension is applied in the MD direction, in a case where the heat resistance of the film is low during heating, the film is likely to be thermal-elongated in the MD direction.

On the other hand, it is considered that the biaxially oriented polypropylene film 100 of the present embodiment has characteristics of expanding in the TD direction and contracting in the MD direction in a case of being subjected to a heat treatment at 120°C for 15 minutes, and thus, the thermal shrinkage in the TD direction and the thermal elongation in the MD direction are unlikely to occur even in a case where the biaxially oriented polypropylene film 100 is heated. Therefore, it is presumed that, according to the biaxially oriented polypropylene film 100 of the present embodiment, which has characteristics of expanding in the TD direction and contracting in the MD direction in a case of being subjected to a heat treatment at 120°C for 15 minutes in conformity with JIS C2151:2019, the thermal dimensional stability is improved, and as a result, the thermal wrinkles of the sealing portion can be further suppressed.

That is, according to the biaxially oriented polypropylene film 100 of the present embodiment, which has characteristics of expansion in the TD direction and contraction in the MD direction in a case of being subjected to a heat treatment at 120°C for 15 minutes in conformity with JIS C2151:2019, the thermal dimensional stability can be further improved.

In addition, since the thermal dimensional stability of such a biaxially oriented polypropylene film 100 is further improved, thermal wrinkles of a sealing portion during bag making can be suppressed, and as a result, the bag-making properties can be improved.

From the viewpoint of further improving the performance balance of thermal dimensional stability and bag-making properties, it is preferable that the biaxially oriented polypropylene film 100 expands in the TD direction in a case where the film is subjected to a heat treatment at 120°C for 15 minutes in conformity with JIS C2151:2019.

More specifically, from the viewpoint of further improving the performance balance of thermal dimensional stability and bag-making properties, and from the viewpoint of further suppressing thermal wrinkles in the sealing portion and obtaining a bag-making product in which the thermal wrinkles in the sealing portion are good, the thermal expansion coefficient of the biaxially oriented polypropylene film 100 in the TD direction in a case of being subjected to a heat treatment at 120°C for 15 minutes is preferably equal to or more than 0.1%, more preferably equal to or more than 0.2%, still more preferably equal to or more than 0.3%, even still more preferably equal to or more than 0.4%, and even still more preferably equal to or more than 0.5%, and from the viewpoint of further improving the performance balance of thermal dimensional stability and bag-making properties, the thermal expansion coefficient is preferably equal to or less than 2.0%, more preferably equal to or less than 1.5%, still more preferably equal to or less than 1.2%, even still more preferably equal to or less than 1.0%, and even still more preferably equal to or less than 0.8%.

Here, a roll of the biaxially oriented polypropylene film is unwound in the MD direction, and bag making, coating, vapor deposition, and the like are performed while applying a tension. That is, since the tension is not applied in the TD direction, the thermal shrinkage is likely to be affected in a case where the biaxially oriented polypropylene film is heated, and the thermal wrinkles are likely to occur in the sealing portion. On the other hand, in a case where the thermal expansion coefficient in the TD direction in a case of being subjected to a heat treatment at 120°C for 15 minutes is within the above-described range, thermal shrinkage hardly occurs in the TD direction even in a case where the biaxially oriented polypropylene film 100 is heated, and thus it is possible to further suppress thermal wrinkles of the sealing portion.

In addition, the thermal expansion coefficient of the biaxially oriented polypropylene film 100 in the TD direction in a case of being subjected to a heat treatment at 120°C for 15 minutes is calculated by the following method.

First, a test piece of 10 cm × 10 cm is cut out from the biaxially oriented polypropylene film 100, and the test piece is subjected to a heat treatment at 120°C for 15 minutes. Next, in a case where a length of the test piece after the heat treatment in the TD direction is denoted by $TD_1$ [cm], the thermal expansion coefficient [%] in the TD direction is calculated by $100 \times (TD_1 - 10)/10$.

In addition, from the viewpoint of further improving the performance balance of thermal dimensional stability and bag-making properties, and the viewpoint of further suppressing the thermal elongation of the film during processing, the thermal shrinkage rate of the biaxially oriented polypropylene film 100 in the MD direction in a case of being subjected to a heat treatment at 120°C for 15 minutes is preferably equal to or less than 5.0%, more preferably equal to or less than 4.0%, still more preferably equal to or less than 3.0%, even still more preferably equal to or less than 2.5%, even still more preferably equal to or less than 2.2%, and even still more preferably equal to or less than 2.0%, and may be equal to or more than 0.1%, equal to or more than 0.3%, or equal to or more than 0.5%.

Here, a roll of the biaxially oriented polypropylene film is unwound in the MD direction, and bag making, coating, vapor deposition, and the like are performed while applying a tension. That is, since tension is applied in the MD direction, in a case where the heat resistance of the film is low during heating, the film is likely to be thermal-elongated in the MD direction. On the other hand, in a case where the thermal shrinkage rate in the MD direction during the heating treatment at 120°C for 15 minutes is within the above-described range, it is possible to further suppress the thermal elongation in the MD direction during the heating of the biaxially oriented polypropylene film 100.

In addition, the thermal shrinkage rate of the biaxially oriented polypropylene film 100 in the MD direction in a case of being subjected to a heat treatment at 120°C for 15 minutes is calculated by the following method.

First, a test piece of 10 cm × 10 cm is cut out from the biaxially oriented polypropylene film 100, and the test piece is subjected to a heat treatment at 120°C for 15 minutes. Next, in a case where a length of the test piece after the heat treatment in the MD direction is denoted by $MD_1$ [cm], a thermal shrinkage rate [%] in the MD direction is calculated by $100 \times (10 - MD_1)/10$.

In addition, from the viewpoint of further improving the performance balance of thermal dimensional stability and bag-making properties, the thermal shrinkage rate $X_{TD}$ in the TD direction of the biaxially oriented polypropylene film 100 in a case of being subjected to a heat treatment at 150°C for 15 minutes is preferably equal to or less than 8.5%, more preferably equal to or less than 7.0%, still more preferably equal to or less than 5.0%, even still more preferably equal to or less than 3.0%, even still more preferably equal to or less than 2.0%, even still more preferably equal to or less than 1.0%, and even still more preferably equal to or less than 0.8%, and may be equal to or more than 0.0%, equal to or more than 0.1%, or equal to or more than 0.2%.

In addition, from the viewpoint of further improving the performance balance of thermal dimensional stability and bag-making properties, the MD direction thermal shrinkage rate $X_{MD}$ of the biaxially oriented polypropylene film 100 in a case of being subjected to a heat treatment at 150°C for 15 minutes is preferably equal to or less than 8.0%, more preferably equal to or less than 7.0%, still more preferably equal to or less than 6.0%, even still more preferably equal to or less than 5.5%, even still more preferably equal to or less than 5.0%, and even still more preferably equal to or less than 4.8%, and may be equal to or more than 0.1%, equal to or more than 0.5%, equal to or more than 1.0%, equal to or more than 1.5%, equal to or more than 2.0%, or equal to or more than 2.5%.

In the biaxially oriented polypropylene film 100, in a case where a thermal shrinkage rate in the TD direction and a thermal shrinkage rate in the MD direction in a case of being heated at 150°C for 15 minutes are respectively defined as $X_{TD}$ [%] and $X_{MD}$ [%], $X_{TD} + X_{MD}$ is preferably less than 6.0% and more preferably less than 5.0% from the viewpoint of further improving the performance balance of thermal dimensional stability and bag-making properties of the biaxially oriented polypropylene film 100.

In addition, the $X_{TD}$ [%] and the $X_{MD}$ [%] of the biaxially oriented polypropylene film 100 are calculated by the following method.

First, a test piece of 10 cm $\times$ 10 cm is cut out from the biaxially oriented polypropylene film 100, and the test piece is subjected to a heat treatment at 150°C for 15 minutes. Next, in a case where the length of the test piece in the TD direction after the heat treatment is denoted by $TD_1$ [cm] and the length of the test piece in the MD direction after the heat treatment is denoted by $MD_1$ [cm], $X_{TD}$ [%] is calculated by 100 $\times$ (10 - $TD_1$)/10, and $X_{MD}$ [%] is calculated by 100 $\times$ (10 - $MD_1$)/10.

The thermal expansion coefficient and the thermal shrinkage rate of the biaxially oriented polypropylene film 100 can be adjusted by, for example, adjusting the kind and the content ratio of the propylene-based polymer contained in the biaxially oriented film layer 101, the thickness and the stretching ratio of the biaxially oriented film layer 101, the constituent material and the thickness of the surface resin layer 103, and the like.

In addition, the thermal expansion coefficient and the thermal shrinkage rate of the biaxially oriented polypropylene film 100 can be measured in conformity with JIS C2151:2019.

From the viewpoint of further improving the performance balance of thermal dimensional stability and bag-making properties, a thermal fusion strength (hereinafter, also referred to as "thermal fusion strength at 200°C") in a case where the biaxially oriented polypropylene films 100 are heat-sealed to each other at 200°C is preferably equal to or less than 4.0 N/15 mm.

In the present specification, the thermal fusion strength is used as an indicator of heat resistance fusion properties of a surface of a biaxially oriented polypropylene film. It can be determined that the lower the thermal fusion strength, the better the heat resistance fusion properties of the surface of the biaxially oriented polypropylene film.

Here, the thermal fusion strength in a case of heat sealing at 200°C can be measured by the following method. First, two biaxially oriented polypropylene films 100 are heat-fused under conditions of 200°C, a pressure of 2.0 kgf, and a sealing time of 1.0 seconds to obtain a laminated film. Next, the two biaxially oriented polypropylene films 100 are peeled off under the conditions of a width of 15 mm, a peeling angle of 90 degrees, a peeling speed of 300 mm/min, and a tensile direction in the TD direction, and the peeling strength at that time is defined as the thermal fusion strength.

As described above, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

Here, according to the studies by the present inventors, it was found that the thermal dimensional stability of the biaxially oriented polypropylene film having a thermal fusion strength of equal to or less than 4.0 N/15 mm in a case of heat sealing at 200°C can be improved.

That is, according to the biaxially oriented polypropylene film 100 of the present embodiment in which the thermal fusion strength in a case of heat sealing at 200°C is equal to or less than 4.0 N/15 mm, thermal dimensional stability can be further improved.

In addition, since the thermal dimensional stability of such a biaxially oriented polypropylene film 100 is further improved, thermal wrinkles of a sealing portion during bag making can be suppressed, and as a result, the bag-making properties can be improved.

In addition, from the viewpoint of environmental issues, the monomaterialization of the packaging material is required, and from the viewpoint of suppressing thermal wrinkles of the sealing portion during bag making and the viewpoint of suppressing thermal fusion of the film to the seal bar, the improvement of the heat resistance of the film surface is required as compared with the biaxially oriented polypropylene film in the related art.

Since the biaxially oriented polypropylene film 100 of the present embodiment in which the thermal fusion strength in a case of heat sealing at 200°C is equal to or less than 4.0 N/15 mm has a more improved performance balance of thermal dimensional stability and heat resistance of the film surface, the thermal wrinkles of the sealing portion and the heat fusion of the film to the seal bar during bag making can be further suppressed.

In the package produced using the biaxially oriented polypropylene film 100, from the viewpoint of further improving the performance balance between the fusion prevention property of the film to the seal bar during the bag making process and the seal appearance, the thermal fusion strength (TD tensile direction) of the portion where the biaxially oriented polypropylene film 100 is thermal-fused under the conditions of 200°C, pressure of 2.0 kgf, and a sealing time of 1.0 second (hereinafter, also referred to as "thermal fusion strength at 200°C") is preferably equal to or less than 4.0 N/15 mm, more preferably equal to or less than 3.5 N/15 mm, still more preferably equal to or less than 3.0 N/15 mm, even still more preferably equal to or less than 2.5 N/15 mm, even still more preferably equal to or less than 2.0 N/15 mm, even still more preferably equal to or less than 1.5 *N/15* mm, and even still more preferably equal to or less than 1.3 *N/15* mm. The lower limit value of the thermal fusion strength of the biaxially oriented polypropylene film 100 at 200°C is not particularly limited, but may be equal to or more than 0.01 *N/15* mm, equal to or more than 0.05 *N/15* mm, equal to or more than 0.1 *N/15* mm, equal to or more than 0.3 N/15 mm, equal to or more than 0.5 *N/15* mm, or equal to or more than 0.8 N/15 mm.

In the present specification, the thermal fusion strength is used as an indicator of heat resistance fusion properties of a surface of a biaxially oriented polypropylene film. It can be determined that the lower the thermal fusion strength, the better the heat resistance fusion properties of the surface of the biaxially oriented polypropylene film.

Here, the thermal fusion strength at 200°C can be measured by the following method. First, two biaxially oriented polypropylene films 100 are heat-fused under conditions of 200°C, a pressure of 2.0 kgf, and a sealing time of 1.0 seconds to obtain a laminated film. Next, the two biaxially oriented polypropylene films 100 were peeled off under the conditions of a width of 15 mm, a peeling angle of 90 degrees, a peeling speed of 300 mm/min, and a tensile direction in the TD direction, and the peeling strength at that time is defined as the thermal fusion strength.

The thermal fusion strength at 200°C can be adjusted, for example, by adjusting the type and content ratio of the homopolypropylene (A) and the polymer (B) contained in the biaxially oriented film layer 101, the thickness and stretching ratio of the biaxially oriented film layer 101, the constituent material and thickness of the surface resin layer 103, and the like.

From the viewpoint of further improving the performance balance of thermal dimensional stability and bag-making properties, the thermal fusion strength in a case where the biaxially oriented polypropylene films 100 are heat-sealed at 170°C (hereinafter, also referred to as "thermal fusion strength at 170°C") is preferably equal to or less than 1.0 *N/15* mm, more preferably equal to or less than 0.8 N/15 mm, still more preferably equal to or less than 0.5 *N/15* mm, even still more preferably equal to or less than 0.3 N/15 mm, and even still more preferably equal to or less than 0.2 N/15 mm. The lower limit value of the thermal fusion strength of the biaxially oriented polypropylene film 100 at 170°C is not particularly limited, but may be equal to or more than 0.01 *N/15* mm, equal to or more than 0.03 N/15 mm, or equal to or more than 0.05 *N/15* mm.

Here, the thermal fusion strength in a case of heat sealing at 170°C can be measured by the following method. First, two biaxially oriented polypropylene films 100 are heat-fused under conditions of 170°C, a pressure of 2.0 kgf, and a sealing time of 1.0 seconds to obtain a laminated film. Next, the two biaxially oriented polypropylene films 100 are peeled off under the conditions of a width of 15 mm, a peeling angle of 90 degrees, a peeling speed of 300 mm/min, and a tensile direction in the TD direction, and the peeling strength at that time is defined as the thermal fusion strength.

The thermal fusion strength at 170°C can be adjusted, for example, by adjusting the kind and content ratio of the propylene-based polymer contained in the biaxially oriented film layer 101, the thickness and stretching ratio of the biaxially oriented film layer 101, the constituent material and thickness of the surface resin layer 103, and the like.

From the viewpoint of further improving the transparency of the biaxially oriented polypropylene film 100, the haze of the biaxially oriented polypropylene film 100, which is measured using a haze meter in conformity with JIS K7136:2000, is preferably equal to or less than 5.0%, more preferably equal to or less than 3.0%, still more preferably equal to or less than 2.5%, even still more preferably equal to or less than 2.0%, even still more preferably equal to or less than 1.5%, and even still more preferably equal to or less than 1.0%.

Such haze can be adjusted, for example, by adjusting the kind and content ratio of the propylene-based polymer contained in the biaxially oriented film layer 101, the thickness and stretching ratio of the biaxially oriented film layer 101, the constituent material and thickness of the surface resin layer 103, and the like.

Here, the packaging body for food produced using the biaxially oriented polypropylene film 100 exhibits sufficient performance in terms of water vapor barrier properties. Therefore, the biaxially oriented polypropylene film 100 can be particularly suitably used as a packaging film for food for packaging food which requires water vapor barrier properties.

From the viewpoint of stably obtaining a packaging body for food having improved water vapor barrier properties, the water vapor permeability of the biaxially oriented polypropylene film 100, which is measured by the following method, is preferably equal to or less than 20.0 g/(m$^2$·24h), more preferably equal to or less than 15.0 g/(m$^2$·24h), still more preferably equal to or less than 12.0 g/(m$^2$·24h), even still more preferably equal to or less than 10.0 g/(m$^2$·24h), and even further still more preferably equal to or less than 8.0 g/(m$^2$·24h).

(Measurement Method)

The biaxially oriented polypropylene film 100 is folded and two sides are heat-sealed to form a bag shape. Then, calcium chloride is put in as a content. Next, the other side is heat-sealed to produce a bag having a surface area of 0.01 m$^2$. Next, the obtained bag is stored for 72 hours under the conditions of 40°C and a humidity of 90%RH. The mass of calcium chloride before and after storage is measured, and the water vapor permeability (g/(m$^2$·24h)) is calculated from the difference.

Such water vapor permeability can be adjusted, for example, by adjusting the kind and content ratio of the propylene-based polymer contained in the biaxially oriented film layer 101, the thickness and stretching ratio of the biaxially oriented film layer 101, the constituent material and thickness of the surface resin layer 103, and the like.

From the viewpoint of further improving the performance balance of moldability, thermal dimensional stability, and bag-making properties of the biaxially oriented polypropylene film 100, in a case where the total content of the constitutional units derived from monomers contained in the biaxially oriented polypropylene film 100 is set to 100% by mole, the content of the constitutional units derived from an $\alpha$-olefin other than propylene contained in the biaxially oriented polypropylene film 100 is preferably equal to or more than 0.05% by mole, more preferably equal to or more than 0.1% by mole, still more preferably equal to or more than 0.3% by mole, even still more preferably equal to or more than 0.5% by mole, even still more preferably equal to or more than 1.0% by mole, even still more preferably equal to or more than 3.0% by mole, even still more preferably equal to or more than 5.0% by mole, even still more preferably equal to or more than 8.0% by mole, and even still more preferably equal to or more than 10.0% by mole, and from the viewpoint of further improving the performance balance of thermal dimensional stability, water vapor barrier properties, bag-making properties, and transparency of the biaxially oriented polypropylene film 100, the content of the constitutional units is preferably equal to or less than 50.0% by mole, more preferably equal to or less than 30.0% by mole, still more preferably equal to or less than 25.0% by mole, even still more preferably equal to or less than 20.0% by mole, even still more preferably equal to or less than 15.0% by mole, even still more preferably equal to or less than 12.0% by mole, even still more preferably equal to or less than 10.0% by mole, even still more preferably equal to or less than 8.0% by mole, even still more preferably equal to or less than 5.0% by mole, even still more preferably equal to or less than 2.0% by mole, and even still more preferably equal to or less than 1.0% by mole.

In a case where the content of the constitutional unit derived from $\alpha$-olefin other than propylene, which is contained in the biaxially oriented polypropylene film 100, is within the above-described range, the softening effect of the constitutional unit derived from $\alpha$-olefin is exhibited, and thus the effect of suppressing the yield point stress at the start of stretching in the stretching step is exhibited, and the ease of moldability is improved. In addition, due to the effect of lowering the melting point by the constitutional unit derived from $\alpha$-olefin, the residual stress in the thermal fixing step during film molding is more efficiently relaxed, and thus the moldability is improved, and the thickness unevenness can be suppressed. As a result, the thermal dimensional stability of the biaxially oriented polypropylene film 100 can be further improved.

The content of the constitutional unit derived from $\alpha$-olefin other than propylene in the biaxially oriented polypropylene film 100 can be measured by the method described in Examples.

From the viewpoint of further improving the performance balance of thermal dimensional stability, moldability, water vapor barrier properties, cost, mechanical properties, transparency, bag-making properties, handleability, appearance, lightweight properties, and the like, the thickness of the biaxially oriented polypropylene film 100 is preferably equal to or more than 5 $\mu$m, more preferably equal to or more than 10 $\mu$m, still more preferably equal to or more than 12 $\mu$m, and even still more preferably equal to or more than 15 $\mu$m, and is preferably equal to or less than 100 $\mu$m, more preferably equal to or less than 50 $\mu$m, still more preferably equal to or less than 40 $\mu$m, even still more preferably equal to or less than 30 $\mu$m, and even still more preferably equal to or less than 25 $\mu$m.

Hereinafter, each layer constituting the biaxially oriented polypropylene film 100 will be described.

[Biaxially oriented film layer]

The biaxially oriented film layer 101 (also referred to as a biaxially oriented polypropylene-based film layer) contains a propylene-based polymer.

The biaxially oriented film layer 101 is formed, for example, by biaxially stretching a film formed of a propylene-based polymer composition containing a propylene-based polymer.

The biaxially oriented film layer 101 may be a single layer or may have a configuration in which a plurality of layers formed of a propylene-based polymer composition are laminated, but it is necessary that the biaxially oriented film layer 101 is formed by biaxial stretching.

From the viewpoint of further improving the performance balance of the biaxially oriented polypropylene film 100 in terms of thermal dimensional stability, moldability, water vapor barrier properties, cost, mechanical properties, transparency, bag-making properties, handleability, appearance, lightweight properties, and the like, the thickness of the biaxially oriented film layer 101 is preferably equal to or more than 5 $\mu$m, more preferably equal to or more than 10 $\mu$m, still more preferably equal to or more than 12 $\mu$m, and even still more preferably equal to or more than 15 $\mu$m, and is preferably equal to or less than 100 $\mu$m, more preferably equal to or less than 50 $\mu$m, still more preferably equal to or less than 40 $\mu$m, even still more preferably equal to or less than 30 $\mu$m, and even still more preferably equal to or less than 20 $\mu$m.

In the biaxially oriented polypropylene film 100, the proportion of the thickness of the biaxially oriented film layer 101 to the total thickness of the biaxially oriented polypropylene film 100 is preferably equal to or more than 50%, more preferably equal to or more than 60%, still more preferably equal to or more than 70%, and even still more preferably equal to or more than 75%, and is preferably equal to or less than 100%, more preferably equal to or less than 99%, still more preferably equal to or less than 95%, and even still more preferably equal to or less than 90%.

(Propylene-based polymer composition)

The propylene-based polymer composition of the present embodiment contains a propylene-based polymer.

From the viewpoint of further improving the performance balance of the biaxially oriented polypropylene film 100 in terms of thermal dimensional stability, environmental suitability, heat resistance, water vapor barrier properties, transparency, cost, mechanical properties, stiffness, bag-making properties, fluidity, moldability, handleability, appearance, lightweight properties, and the like, in a case where the total amount of the propylene-based polymer composition is 100% by mass, the content of the propylene-based polymer in the propylene-based polymer composition, that is, the biaxially oriented film layer 101 according to the present embodiment is preferably equal to or more than 60% by mass, more preferably equal to or more than 70% by mass, still more preferably equal to or more than 80% by mass, even still more preferably equal to or more than 90% by mass, even still more preferably equal to or more than 95% by mass, and even still more preferably equal to or more than 98% by mass, and is, for example, equal to or less than 100% by mass.

(Propylene-based polymer)

The propylene-based polymer of the present embodiment is a polymer including a constitutional unit derived from propylene, and examples thereof include a homopolypropylene (A); at least one polymer (B) selected from the group consisting of a random polypropylene (B1) and an $\alpha$-olefin copolymer (B2); and the like.

From the viewpoint of further improving the performance balance of the thermal dimensional stability and the antistatic properties of the biaxially oriented polypropylene film 100, the propylene-based polymer of the present embodiment preferably includes a homopolypropylene (A) and at least one polymer (B) selected from the group consisting of a random polypropylene (B1) and an $\alpha$-olefin copolymer (B2), and more preferably includes a homopolypropylene (A) and at least one polymer (B) selected from the group consisting of a random polypropylene (B1) and an $\alpha$-olefin copolymer (B2), and the MFR of the polymer (B) measured under the condition of 230°C and 2.16 kg load in conformity with ASTM D1238 is equal to or more than 0.01 g/10 min and equal to or less than 30.0 g/10 min.

As described above, from the viewpoint of suppressing thermal wrinkles of a sealing portion during bag making or from the viewpoint of suppressing thermal elongation during vapor deposition or coating processing, further improvement of thermal dimensional stability is required for the biaxially oriented polypropylene film.

On the other hand, from the viewpoint of improving thermal dimensional stability, in a case where a homopolypropylene having high crystallinity is used, the yield point stress during molding is high due to the high crystallinity, and the stretching point is not stable, so that the effect of improving thermal dimensional stability is not sufficiently obtained.

Here, according to the study of the present inventors, it was found that in a case where a homopolypropylene (A) and at least one polymer (B) selected from the group consisting of a random polypropylene (B1) and an $\alpha$-olefin copolymer (B2) is used in combination as a propylene-based polymer constituting the OPP film, the residual stress of the film is efficiently relaxed, and thus the thermal dimensional stability of the biaxially oriented polypropylene film can be improved.

That is, according to the biaxially oriented polypropylene film 100 of the present embodiment including the homopolypropylene (A) and at least one polymer (B) selected from the group consisting of the random polypropylene (B1) and the $\alpha$-olefin copolymer (B2), thermal dimensional stability can be further improved.

In addition, since the thermal dimensional stability of such a biaxially oriented polypropylene film 100 is further improved, thermal wrinkles of a sealing portion during bag making can be further suppressed, and as a result, the bag-making properties can be further improved.

(Homopolypropylene (A))

Examples of the homopolypropylene (A) include a propylene homopolymer and a propylene-based copolymer in which the content of constitutional units derived from an $\alpha$-olefin other than propylene is equal to or less than 2.0% by mole.

In the homopolypropylene (A), in a case where the total content of the constitutional units constituting the homopolypropylene (A) is set to 100% by mole, the content of the constitutional units derived from propylene is equal to or more than 98.0% by mole, preferably equal to or more than 98.5% by mole, more preferably equal to or more than 98.7% by mole, still more preferably equal to or more than 99.0% by mole, even still more preferably equal to or more than 99.5% by mole, and even further still more preferably equal to or more than 99.8% by mole, and is, for example, equal to or less than 100.0% by mole.

The $\alpha$-olefin other than propylene includes, for example, one or two or more selected from the group consisting of ethylene and an $\alpha$-olefin having carbon atoms equal to or more than 4 and equal to or less than 20, preferably includes one or two or more selected from the group consisting of ethylene and an $\alpha$-olefin having carbon atoms equal to or more than 4 and equal to or less than 6, more preferably includes at least one selected from the group consisting of ethylene and 1-butene, and still more preferably includes ethylene.

In a case where the entire amount of the homopolypropylene (A) is set to 100% by mole, the content of the constitutional unit derived from an α-olefin other than propylene is preferably equal to or less than 2.0% by mole, more preferably equal to or less than 1.5% by mole, still more preferably equal to or less than 1.3% by mole, even still more preferably equal to or less than 1.0% by mole, even still more preferably equal to or less than 0.5% by mole, and even still more preferably equal to or less than 0.2% by mole.

The homopolypropylene (A) in the biaxially oriented film layer 101 may be used alone or in combination of two or more kinds thereof.

From the viewpoint of further improving the performance balance of the biaxially oriented polypropylene film 100 in terms of thermal dimensional stability, heat resistance, water vapor barrier properties, mechanical properties, stiffness, bag-making properties, and the like, the isotactic mesopentad fraction (mmmm) of the homopolypropylene (A) is preferably equal to or more than 96.0%, more preferably equal to or more than 96.5%, still more preferably equal to or more than 97.0%, even still more preferably equal to or more than 97.3%, even still more preferably equal to or more than 97.5%, even still more preferably equal to or more than 97.8%, and even still more preferably equal to or more than 98.0%. The upper limit of the isotactic mesopentad fraction (mmmm) of the homopolypropylene (A) is not particularly limited, but is preferably equal to or less than 99.5%, more preferably equal to or less than 99.3%, and still more preferably equal to or less than 99.0% from the viewpoint of ease of production.

The isotactic mesopentad fraction (mmmm) is an index of stereoregularity, and can be obtained by a known method from a $^{13}$C-nuclear magnetic resonance (NMR) spectrum.

In a case where two or more kinds of homopolypropylenes are used as the homopolypropylene (A), the isotactic mesopentad fraction of the homopolypropylene (A) can be adopted as the isotactic mesopentad fraction of a mixture obtained by melt-blending two or more kinds of homopolypropylenes (A) by a known method.

From the viewpoint of further improving the performance balance of fluidity and moldability, a melt flow rate (MFR) of the homopolypropylene (A) measured under a condition of 230°C and a load of 2.16 kg in conformity with ASTM D1238 is preferably equal to or more than 0.5 g/10 min, more preferably equal to or more than 1.0 g/10 min, and still more preferably equal to or more than 2.0 g/10 min, and from the viewpoint of further stabilizing moldability, the melt flow rate is preferably equal to or less than 20.0 g/10 min, more preferably equal to or less than 10.0 g/10 min, and still more preferably equal to or less than 7.0 g/10 min.

In a case where two or more kinds of homopolypropylenes are used as the homopolypropylene (A), as the MFR of the homopolypropylene (A), the MFR of a mixture obtained by melt-blending two or more kinds of homopolypropylenes (A) can be adopted.

From the viewpoint of further improving the performance balance of the biaxially oriented polypropylene film 100 in terms of thermal dimensional stability, heat resistance, water vapor barrier properties, mechanical properties, stiffness, bag-making properties, fluidity, and moldability, the melting point of the homopolypropylene (A) is preferably equal to or higher than 150°C, more preferably equal to or higher than 155°C, still more preferably equal to or higher than 160°C, and even more preferably equal to or higher than 163°C, and is preferably equal to or lower than 180°C, more preferably equal to or lower than 175°C, still more preferably equal to or lower than 170°C, and even more preferably equal to or lower than 168°C.

In a case where two or more kinds of homopolypropylenes are used as the homopolypropylene (A), the melting point of the homopolypropylene (A) is a peak temperature of the maximum melting peak.

The homopolypropylene (A) can be produced by various methods. For example, a known catalyst such as a Ziegler-Natta type catalyst or a metallocene type catalyst can be used for the production.

(Polymer (B))

The polymer (B) includes at least one selected from the group consisting of a random polypropylene (B1) and an α-olefin copolymer (B2), and preferably includes the random polypropylene (B1).

From the viewpoint of further improving the performance balance of the moldability and the thermal dimensional stability of the biaxially oriented polypropylene film 100, the melt flow rate (MFR) of the polymer (B), which is measured under the conditions of 230°C and a load of 2.16 kg in conformity with ASTM D1238, is preferably equal to or more than 0.01 g/10 min, more preferably equal to or more than 0.1 g/10 min, still more preferably equal to or more than 0.5 g/10 min, even still more preferably equal to or more than 1.0 g/10 min, and even still more preferably equal to or more than 2.0 g/10 min, and is preferably equal to or less than 30.0 g/10 min, more preferably equal to or less than 20.0 g/10 min, still more preferably equal to or less than 15.0 g/10 min, even still more preferably equal to or less than 12.0 g/10 min, and even still more preferably equal to or less than 10.0 g/10 min.

In a case where two or more kinds of polymers are used as the polymer (B), the MFR of a mixture obtained by melt-blending two or more kinds of polymers (B) by a known method can be adopted.

From the viewpoint of further improving the performance balance of the biaxially oriented polypropylene film 100 in terms of thermal dimensional stability, heat resistance, water vapor barrier properties, mechanical properties, stiffness, bag-making properties, fluidity, and moldability, the melting point of the polymer (B) is preferably equal to or higher than 50°C, more preferably equal to or higher than 60°C, still more preferably equal to or higher than 70°C, even more preferably equal to or higher than 80°C, and even more preferably equal to or higher than 90°C, and is preferably equal to or lower than 155°C, more preferably equal to or lower than 150°C, still more preferably equal to or lower than 148°C, and even more preferably equal to or lower than 145°C.

In a case where two or more kinds of polymers are used as the polymer (B), the melting point of the polymer (B) is the peak temperature of the maximum melting peak.

From the viewpoint of further improving the performance balance of the moldability, the thermal dimensional stability, the blocking resistance, and the sheet winding properties of the biaxially oriented polypropylene film 100, the weight-average molecular weight (Mw) of the polymer (B) is preferably equal to or more than 100,000, more preferably equal to or more than 150,000, still more preferably equal to or more than 200,000, and even still more preferably equal to or more than 220,000, and from the viewpoint of further improving the thermal dimensional stability, the weight-average molecular weight (Mw) of the polymer (B) is preferably equal to or less than 1,000,000, more preferably equal to or less than 800,000, still more preferably equal to or less than 600,000, even still more preferably equal to or less than 500,000, and even still more preferably equal to or less than 450,000.

From the viewpoint of further improving the performance balance of the moldability, the thermal dimensional stability, the blocking resistance, and the sheet winding properties of the biaxially oriented polypropylene film 100, the weight-average molecular weight (Mw)/number-average molecular weight (Mn) of the polymer (B) is preferably equal to or more than 1.5 and more preferably equal to or more than 1.8, and from the viewpoint of further improving the performance balance of the moldability, the thermal dimensional stability, the blocking resistance, and the sheet winding properties of the biaxially oriented polypropylene film 100, the weight-average molecular weight (Mw)/number-average molecular weight (Mn) of the polymer (B) is preferably equal to or less than 8.0, more preferably equal to or less than 7.5, still more preferably equal to or less than 7.0, and even still more preferably equal to or less than 6.8.

In a case where two or more kinds of polymers are used as the polymer (B), as the weight-average molecular weight (Mw) and the number-average molecular weight (Mn) of the polymer (B), the weight-average molecular weight (Mw) and the number-average molecular weight (Mn) of a mixture obtained by melt-blending two or more kinds of polymers (B) by a known method can be adopted. The weight-average molecular weight (Mw) and the number-average molecular weight (Mn) of the polymer (B) can be measured by the method described in Examples.

From the viewpoint of further improving the performance balance of the moldability and the thermal dimensional stability of the biaxially oriented polypropylene film 100, in a case where the total amount of the biaxially oriented film layer 101 is 100% by mass, the content of the polymer (B) is preferably equal to or more than 1% by mass, more preferably equal to or more than 2% by mass, and still more preferably equal to or more than 3% by mass, and from the viewpoint of further improving the performance balance of the thermal dimensional stability, the water vapor barrier properties, the transparency, the mechanical properties, the stiffness, the bag-making properties, the fluidity, and the moldability of the biaxially oriented polypropylene film 100, the content of the polymer (B) is preferably equal to or less than 50% by mass, more preferably equal to or less than 40% by mass, still more preferably equal to or less than 30% by mass, even still more preferably equal to or less than 25% by mass, even still more preferably equal to or less than 22% by mass, and even still more preferably equal to or less than 20% by mass.

(Random polypropylene (B1))

The random polypropylene (B1) contains a random copolymer of propylene and an $\alpha$-olefin other than propylene, in which a content of a constitutional unit derived from an $\alpha$-olefin other than propylene is more than 2.0 % by mole and equal to or less than 15.0% by mole.

The $\alpha$-olefin other than propylene includes, for example, one or two or more selected from the group consisting of ethylene and $\alpha$-olefins having carbon atoms equal to or more than 4 and equal to or less than 20, preferably includes one or two or more selected from the group consisting of ethylene and $\alpha$-olefins having carbon atoms equal to or more than 4 and equal to or less than 6, more preferably includes at least one selected from ethylene and 1-butene, and still more preferably includes ethylene.

From the viewpoint of further improving the performance balance of moldability, thermal dimensional stability, and bag-making property of the biaxially oriented polypropylene film 100, in a case where the total of the random polypropylene (B1) is set to 100 % by mole, in the random polypropylene (B1), the content of the constitutional unit derived from an $\alpha$-olefin other than propylene is preferably more than 2.0 % by mole, more preferably equal to or more than 2.5 % by mole, still more preferably equal to or more than 3.0% by mole, still more preferably equal to or more than 3.5 % by mole, and still more preferably equal to or more than 4.0% by mole, and from the viewpoint of further improving the performance balance of thermal dimensional stability, water vapor barrier properties, bag-making property, and transparency of the biaxially oriented polypropylene film 100, the content of the constitutional unit is preferably equal to or less than 15.0% by mole, more preferably equal to or less than 12.0% by mole, still more preferably equal to or less than 10.0% by mole, still more preferably equal to or less than 8.0% by mole, and still more preferably equal to or less than 6.5 % by mole.

The content of the constitutional unit derived from α-olefin other than propylene can be measured by the method described in Examples.

The random polypropylene (B1) preferably includes one or two or more selected from the group consisting of a propylene-ethylene random copolymer, a propylene-ethylene-1-butene random copolymer, and a propylene-1-butene random copolymer, more preferably includes one or two or more selected from the group consisting of a propylene-ethylene random copolymer and a propylene-1-butene random copolymer, and still more preferably includes a propylene-ethylene random copolymer.

The random polypropylene (B1) in the biaxially oriented film layer 101 may be used alone or in combination of two or more kinds thereof.

(α-Olefin copolymer (B2))

The α-olefin copolymer (B2) is a copolymer of two or more of α-olefins, and includes, for example, an α-olefin copolymer in which a content of a constitutional unit derived from an α-olefin other than propylene is more than 15.0% by mole.

The α-olefin copolymer (B2) includes a random copolymer of propylene and an α-olefin other than propylene, in which a content of a constitutional unit derived from an α-olefin other than propylene is more than 15.0% by mole.

The α-olefin other than propylene includes, for example, one or two or more selected from the group consisting of ethylene and α-olefins having carbon atoms equal to or more than 4 and equal to or less than 10, preferably includes one or two or more selected from the group consisting of α-olefins having carbon atoms equal to or more than 4 and equal to or less than 8, more preferably includes at least one kind selected from 1-butene and 1-octene, and still more preferably includes 1-butene.

From the viewpoint of further improving the performance balance of the moldability, the thermal dimensional stability, and the bag-making property of the biaxially oriented polypropylene film 100, in a case where the total of the α-olefin copolymer (B2) is set to 100% by mole, in the α-olefin copolymer (B2), the content of the constitutional unit derived from an α-olefin other than propylene is preferably more than 15.0% by mole, more preferably equal to or more than 20.0% by mole, still more preferably equal to or more than 30.0% by mole, even still more preferably equal to or more than 50.0% by mole, even still more preferably equal to or more than 70.0% by mole, and even still more preferably equal to or more than 80.0% by mole, and from the viewpoint of further improving the performance balance of the thermal dimensional stability, the water vapor barrier properties, the bag-making property, and the transparency of the biaxially oriented polypropylene film 100, the content of the constitutional unit is preferably equal to or less than 99.0% by mole, more preferably equal to or less than 98.0% by mole, still more preferably equal to or less than 95.0% by mole, even still more preferably equal to or less than 92.0% by mole, and even still more preferably equal to or less than 90.0% by mole.

The content of the constitutional unit derived from an α-olefin other than propylene in the α-olefin copolymer (B2) can be measured by the method described in Examples.

The α-olefin copolymer (B2) preferably includes a random copolymer of propylene, ethylene, and one or two or more α-olefins selected from the group consisting of α-olefins having carbon atoms equal to or more than 4 and equal to or less than 10, more preferably includes a random copolymer of propylene and one or two α-olefins selected from the group consisting of 1-butene and 1-octene, and still more preferably includes a random copolymer of propylene and 1-butene.

The α-olefin copolymer (B2) in the biaxially oriented film layer 101 may be used alone or in combination of two or more kinds thereof.

The polymer (B) can be produced by various methods. For example, a known catalyst such as a Ziegler-Natta type catalyst or a metallocene type catalyst can be used for the production.

(Other Components)

Various additives such as a tackifier, a heat-resistant stabilizer, a weather-resistant stabilizer, an antioxidant, an ultraviolet absorber, a lubricant, a slip agent, a nucleating agent, an antiblocking agent, an antistatic agent, an antifogging agent, a pigment, a dye, and an inorganic or organic filler may be added as necessary to the propylene-based polymer composition according to the present embodiment as long as the object of the present embodiment is not impaired.

(Preparation method for propylene-based polymer composition)

The propylene-based polymer composition according to the present embodiment can be prepared by mixing or melting-kneading the respective components by a dry blend, a tumbler mixer, a Banbury mixer, a single-screw extruder, a twin-screw extruder, a high-speed twin-screw extruder, a thermal roll, or the like.

[Surface resin layer]

From the viewpoint of imparting functions such as heat resistance fusion properties, heat sealability, antistatic properties, blocking resistance, printing suitability, and slip properties to the film surface, the biaxially oriented polypropylene film 100 preferably further includes a surface resin layer 103 on at least one surface of the biaxially oriented film layer 101, depending on the purpose.

The surface resin layer 103 may be provided on both surfaces of the biaxially oriented film layer 101. By providing the surface resin layer 103 on both surfaces of the biaxially oriented film layer 101, different functions can be imparted to each surface of the film.

In addition, from the viewpoint of further improving the functions of the biaxially oriented polypropylene film 100 such as heat resistance fusion properties, heat sealability, antistatic property, blocking resistance, printing suitability, and slip properties, the surface resin layer 103 is preferably provided on the outermost layer of the biaxially oriented polypropylene film 100 depending on the purpose.

It is preferable that the surface resin layer 103 is provided to be in direct contact with the surface of the biaxially oriented film layer 101. As a result, the manufacturing process of the biaxially oriented polypropylene film 100 can be simplified.

In the biaxially oriented polypropylene film 100, from the viewpoint of further improving the functions of the biaxially oriented polypropylene film 100 such as the heat resistance fusion properties, the antistatic properties, the blocking resistance, the printing suitability, and the slip properties, the thickness of the surface resin layer 103 is preferably equal to or more than 0.1 $\mu$m, more preferably equal to or more than 0.2 $\mu$m, still more preferably equal to or more than 0.5 $\mu$m, even more preferably equal to or more than 1.0 $\mu$m, and yet even more preferably equal to or more than 1.5 $\mu$m, and from the viewpoint of further improving the performance balance of the biaxially oriented polypropylene film 100 such as the heat resistance fusion properties, the thermal dimensional stability, the moldability, the cost, the mechanical properties, the transparency, the environmental suitability, and the lightweight properties, the thickness is preferably equal to or less than 10.0 $\mu$m, more preferably equal to or less than 8.0 $\mu$m, still more preferably equal to or less than 6.0 $\mu$m, even more preferably equal to or less than 5.0 $\mu$m, and even more preferably equal to or less than 3.0 $\mu$m.

Here, the thickness of the surface resin layer 103 refers to the thickness of the surface resin layer 103 provided on one surface of the biaxially oriented film layer 101. That is, in the present embodiment, in a case where the surface resin layer 103 is provided on both surfaces of the biaxially oriented film layer 101, the above-described thickness of the surface resin layer 103 indicates the thickness of the surface resin layer 103 provided on one surface of the biaxially oriented film layer 101.

In the biaxially oriented polypropylene film 100, the surface resin layer 103 is preferably a single layer. As a result, the manufacturing process of the biaxially oriented polypropylene film 100 can be further simplified.

The surface resin layer 103 is preferably formed by being biaxially stretched at the same time as the film in a state before the biaxial stretching of the biaxially oriented film layer 101. As a result, since the biaxially oriented polypropylene film 100 can be produced using a molding method such as a co-extrusion molding method, that is, a laminated film produced by one-time molding, the manufacturing step of the biaxially oriented polypropylene film 100 can be further simplified. Therefore, the surface resin layer 103 is preferably biaxially stretched.

In addition, the surface resin layer 103 may be subjected to a surface treatment from the viewpoint of further improving the performance balance of the printing suitability and the blocking resistance of the biaxially oriented polypropylene film 100. Specifically, a surface activation treatment such as a corona treatment, a flame treatment, a plasma treatment, a primer coating treatment, or an ozone treatment may be performed.

The surface resin layer 103 is composed of, for example, a polyolefin-based resin composition (A) containing a polyolefin. The polyolefin constituting the surface resin layer 103 includes, for example, one or more selected from the group consisting of a homopolymer or copolymer of $\alpha$-olefins such as ethylene, propylene, 1-butene, hexene-1,4-methyl-pentene-1, and 1-octene; low-density polyethylene by a high pressure method; linear low-density polyethylene (LLDPE); high-density polyethylene; homopolypropylene; a random copolymer of propylene and an $\alpha$-olefin having carbon atoms equal to or more than 2 and equal to or less than 10; an ethylene-vinyl acetate copolymer (EVA); and an ionomer resin.

Among these, as the polyolefin constituting the surface resin layer 103, from the viewpoint of further improving the performance balance of the heat resistance fusion properties, the thermal dimensional stability, the heat resistance, the water vapor barrier properties, the transparency, the mechanical properties, the stiffness, the bag-making properties, the fluidity, the moldability, and the like of the biaxially oriented polypropylene film 100, homopolypropylene is preferable. Here, the preferred aspect of the homopolypropylene constituting the surface resin layer 103 is the same as that of the above-described homopolypropylene (A). That is, the homopolypropylene constituting the surface resin layer 103 preferably includes the above-described homopolypropylene (A).

From the viewpoint of further improving the performance balance of the heat resistance fusion properties, thermal dimensional stability, heat resistance, water vapor barrier properties, transparency, mechanical properties, stiffness, bag-making properties, fluidity, and moldability of the biaxially oriented polypropylene film 100, in a case where the entire polyolefin-based resin composition (A), that is, the entire surface resin layer 103 is set to 100% by mass, the content of the polyolefin in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

From the viewpoint of further improving the performance balance of the heat resistance fusion properties, thermal dimensional stability, heat resistance, water vapor barrier properties, transparency, mechanical properties, stiffness, bag-making properties, fluidity, and moldability of the biaxially oriented polypropylene film 100, in a case where the entire polyolefin-based resin composition (A), that is, the entire surface resin layer 103 is set to 100% by mass, the content of the homopolypropylene (A) in the polyolefin-based resin composition (A), that is, in the surface resin layer 103 is preferably equal to or more than 75% by mass, more preferably equal to or more than 80% by mass, still more preferably equal to or more than 90% by mass, even still more preferably equal to or more than 95% by mass, even still more preferably equal to or more than 98% by mass, and even still more preferably equal to or more than 99% by mass, and is preferably equal to or less than 100% by mass.

(Other Components)

Various additives such as a tackifier, a heat-resistant stabilizer, a weather-resistant stabilizer, an antioxidant, an ultraviolet absorber, a lubricant, a slip agent, a nucleating agent, an antiblocking agent, an antistatic agent, an antifogging agent, a pigment, a dye, and an inorganic or organic filler may be added as necessary to the polyolefin-based resin composition (A) constituting the surface resin layer 103 according to the present embodiment as long as the object of the present embodiment is not impaired.

(Preparation method for polyolefin-based resin composition (A))

The polyolefin-based resin composition (A) can be prepared by mixing or melting-kneading, for example, the respective components by a dry blend, a tumbler mixer, a Banbury mixer, a single-screw extruder, a twin-screw extruder, a high-speed twin-screw extruder, a thermal roll, or the like.

<Method of manufacturing biaxially oriented polypropylene film>

The biaxially oriented polypropylene film 100 can be obtained by biaxially stretching a film obtained by co-extruding and molding, in a film shape, a propylene-based polymer composition for forming the biaxially oriented film layer 101 and, as necessary, a polyolefin-based resin composition (A) for forming the surface resin layer 103, using a biaxially oriented film manufacturing method such as a known simultaneous biaxial stretching method, a sequential biaxial stretching method, or an inflation biaxial stretching method.

The molding device and the molding conditions are not particularly limited, and molding device and molding conditions known in the related art can be adopted. As the molding device, a T-die extruder, a multilayer T-die extruder, an inflation molding machine, a multilayer inflation molding machine, or the like can be used. As the biaxial stretching conditions, for example, known manufacturing conditions for an OPP film can be adopted. More specifically, in the sequential biaxial stretching method, for example, the stretching temperature in the MD direction may be in a range of 100°C to 145°C, the stretching ratio in the MD direction may be in a range of 4.5 to 6 times, the stretching temperature in the TD direction may be in a range of 130°C to 190°C, and the stretching ratio in the TD direction may be in a range of 9 to 11 times.

In addition, the biaxially oriented polypropylene film 100 can also be obtained by separately molding the biaxially oriented film layer 101 and the surface resin layer 103 as necessary and laminating and heat-molding the biaxially oriented film layer 101 and the surface resin layer 103.

<Applications of biaxially oriented polypropylene film>

The biaxially oriented polypropylene film 100 can also be suitably used as a packaging film for food constituting a packaging body for food.

The packaging body for food according to the present embodiment is a packaging body formed of the biaxially oriented polypropylene film 100, and is, for example, a packaging bag used for the purpose of accommodating food. In addition, in the packaging body for food according to the present embodiment, the biaxially oriented polypropylene film 100 may be used for a part of the packaging body for food according to the use application, or the biaxially oriented polypropylene film 100 may be used for the entire packaging body for food.

The food packaging body according to the present embodiment includes the packaging body for food according to the present embodiment and food in the packaging body for food. That is, the food packaging body of the present embodiment is a packaging body that accommodates food in the packaging body for food of the present embodiment.

Hitherto, the embodiment of the present invention has been described above with reference to the drawings, but these are examples of the present invention, and various configurations other than the description above can be adopted.

The biaxially oriented polypropylene film 100 may further include one or two or more layers selected from the group consisting of a sealant layer and a coating layer.

In addition, the biaxially oriented polypropylene film 100 can also be used as a raw material for coating.

EXAMPLES

Hereinafter, the present embodiments will be described in detail with reference to Examples and Comparative Examples. The present embodiment is not limited to the description of these examples.

1. Raw materials

Raw materials used in Examples and Comparative Examples are shown below.

(1) Homopolypropylene (A)

· h-PP1: homopolypropylene (MFR: 3.0 g/10 min, melting point: 165°C, isotactic mesopentad fraction (mmmm): 98.0%, Mw: 370,000, Mn: 68,000, Mw/Mn: 5.4, content of constitutional unit derived from propylene: 100 % by mole)

(2) Polymer (B)

· r-PP1: random polypropylene (MFR: 7.0 g/10 min, melting point: 139°C, Mw: 322,000, Mn: 50,700, Mw/Mn: 6.4, content of constitutional unit derived from ethylene: 3.2 % by mole, content of constitutional unit derived from 1-butene: 2.9 % by mole, content of constitutional unit derived from propylene: 93.9 % by mole)

· BPR1: 1-butene-propylene copolymer (MFR: 9.0 g/10 min, melting point: 100°C, Mw: 227,000, Mn: 114,000, Mw/Mn: 2.0, content of constitutional unit derived from 1-butene: 88.9 % by mole, content of constitutional unit derived from propylene: 11.1 % by mole)

2. Measurement and evaluation methods

(1) Isotactic mesopentad fraction (mmmm) of homopolypropylene (A)

The isotactic mesopentad fraction (mesopentad fraction, (mmmm) ) was measured by $^{13}$C-NMR using a nuclear magnetic resonance apparatus (manufactured by Bruker Biospin, AVANCE III cryo-500 type). The sample was dissolved in the following measurement solvent and measured, and the evaluation was carried out from the integrated intensity of each signal.

[Measurement conditions]
Measurement nucleus: $^{13}$C (125 MHz)
Measurement mode: single pulse proton broadband decoupling
Pulse width: 45°
Number of points: 64k
Repetition time: 5.5 seconds
Measurement solvent: orthodichlorobenzene/heavy benzene (4:1)
Sample concentration: 50 mg/0.6 mL
Measurement temperature: 120°C
Window function: exponential (BF: 0.5 Hz)
Chemical shift standard: mmmm (CH$_3$): 21.59 ppm

(2) MFR of homopolypropylene (A) and polymer (B)

The MFR was measured under the conditions of 230°C and 2.16 kg load according to ASTM D1238.

(3) Melting points of homopolypropylene (A) and polymer (B)

For the homopolypropylene (A) and the polymer (B), using a differential scanning calorimeter (product name: Q200 DSC, manufactured by TA Instruments), a first differential scanning calorimetry measurement (1st Run) consisting of a process of raising the temperature from -30°C to 250°C at a temperature rising rate of 10°C/min and a process of lowering the temperature from 250°C to -30°C at a temperature falling rate of 10°C/min was continuously performed, and a second differential scanning calorimetry measurement (2nd Run) consisting of a process of raising the temperature from -30°C to 250°C at a temperature rising rate of 10°C/min was continuously performed.

The peak temperature of the maximum melting peak of the DSC curve in the 2nd Run was defined as the melting point.

(4) Weight-average molecular weight (Mw) and number-average molecular weight (Mn) of homopolypropylene (A) and polymer (B)

The weight-average molecular weight (Mw) and the number-average molecular weight (Mn) of the homopolypropylene (A) and the polymer (B) were measured by gel permeation chromatography (GPC) method.

The GPC method was performed using a gel permeation chromatograph (HLC-8321 GPC/HT type, manufactured by Tosoh Corporation) as follows. The separation column was two TSKgel GNH6-HT columns and two TSKgel GNH6-HTL columns, each having a column size of a diameter of 7.5 mm and a length of 300 mm, a column temperature 145°C, and using a mobile phase consisted of o-dichlorobenzene and 0.025% by mass of and BHT as an antioxidant, moving at 1.0 mL/min, a sample concentration of 0.1% (w/v), a sample injection amount of 400 μL, and a differential refractometer as a detector. The polypropylene-converted molecular weight was determined based on the monodisperse polystyrene standard.

(5) Measurement of content of constitutional unit derived from α-olefin other than propylene in homopolypropylene (A) and polymer (B), and content of constitutional unit derived from α-olefin other than propylene in biaxially oriented polypropylene film

The content of the constitutional unit derived from α-olefin other than propylene in the homopolypropylene (A) and the polymer (B), and the content of the constitutional unit derived from α-olefin other than propylene in the biaxially oriented polypropylene film were measured by $^{13}$C-NMR using a nuclear magnetic resonance apparatus (manufactured by Bruker Biospin, AVANCE III cryo-500 type). The sample was dissolved in the following measurement solvent and measured, and the evaluation was carried out from the integrated intensity of each signal. The signals were assigned by the obtained $^{13}$C-NMR spectrum with reference to Macromolecules (1982) Ethylene-1-Butene Copolymers. 1. Comonomer Sequence Distribution, and Macromolecules (1977) Carbon-13 Nuclear Magnetic Resonance Determination of Monomer Composition and Sequence Distributions in Ethylene-Propylene Copolymers Prepared with a Stereoregular Catalyst System, and the content (% by mole) of the constitutional unit derived from ethylene, the content (% by mole) of the constitutional unit derived from propylene, and the content (% by mole) of the constitutional unit derived from 1-butene in each polymer were quantified.

[Measurement conditions]

Measurement nucleus: $^{13}$C (125 MHz)
Measurement mode: single pulse proton broadband decoupling
Pulse width: 45°
Number of points: 64k
Repetition time: 5.5 seconds
Measurement solvent: orthodichlorobenzene/heavy benzene (4:1)
Sample concentration: 50 mg/0.6 mL
Measurement temperature: 120°C
Window function: exponential (BF: 0.5 Hz)

In addition, in the measurement of the content of the constitutional unit derived from α-olefin other than propylene, which is contained in the biaxially oriented polypropylene film, the biaxially oriented polypropylene film was used as a sample.

(6) Tensile modulus

A test piece of 15 mm × 15 cm was cut out from the biaxially oriented polypropylene film. Next, using a tensile tester manufactured by Orientec Co., Ltd., the tensile modulus $T_1$ in the MD direction and the tensile modulus $T_2$ in the TD direction of the test piece were measured under the conditions of a measurement temperature of 23°C, ± 2°C, a relative humidity of 50% ± 5% RH, and a tensile speed of 5 mm/min, in conformity with JIS K7127 (1999).

(7) Small-angle X-ray scattering (SAXS) measurement of biaxially oriented polypropylene film

In the biaxially oriented polypropylene film of each example, for the measurement in the MD direction, the measurement film was set in the following device such that the MD direction of the film was defined as up and down, the TD direction was defined as left and right, and the angle formed between the X-ray source direction and the film surface was perpendicular. In the measurement in the TD direction, the TD direction was defined as up and down, the MD direction was defined as left and right, and small angle X-ray scattering (SAXS) measurement was performed with the following device and conditions.

Device: manufactured by RIGAKU Corporation, Product name: Ultima IV (small angle scattering attachment system)
X-ray incidence direction: film normal direction
X-ray wavelength: 0.15418 nm
Optical unit specifications:

1. Optical system selection slit; 0.03 mm for small angle scattering (= 1st. slit)
2. DS; scattering prevention slit 1.00 mm (= 2nd. slit)
3. Incidence side solar slit; 5° of flexible optical system was used
4. distance between 1st. slit and 2nd. slit; 70 mm
5. distance between 2nd. slit and sample; 98 mm
6. Vacuum path length; 100 mm (front surface of light-receiving slit box, installed on dedicated stand)
7. RS, SS; scattering slit 0.20 mm, light-receiving slit 0.10 mm
8. Camera length; 285 mm
9. Receiving side solar slit; 5° of flexible optical system was used
10. Monochromatization; none (monochromatization on the incident side by the multilayer film mirror)
11. Detector: scintillation detector (HV: 762 V) (one-dimensional) manufactured by RIGAKU Corporation

X-ray irradiation conditions:

A. Scanning axis: 2 theta
B. Measurement method: continuous
C. Scan start angle: 0.1°
D. Scan end angle: 1.0°
E. Sampling width: 0.02°
F. Scan speed: 0.5°/min
G. Voltage-current: 40 kV-40 mA
H. Number of sheets of sample lamination: The samples were laminated to have a thickness of about 0.5 mm in a state where the sample orientations were aligned in order to obtain a sufficient scattering intensity.

The background correction of the detector and the air scattering correction were performed on the X-ray scattering pattern obtained under the above measurement conditions to obtain a SAXS profile I(q). The Bragg angle θ was calculated from the following Equation (1) using the magnitude of the scattering vector of the peak derived from the crystal long period in the SAXS profile, and the crystal long period (d) was calculated by substituting the Bragg angle θ into the following Equation (2) of Bragg.

$$q = 4\pi \, \sin\theta/\lambda \qquad (1)$$

θ: Bragg angle
q: magnitude of scattering vector

λ: X-ray wavelength

$$2d\sin\theta = \lambda \qquad (2)$$

d: crystal long period
θ: Bragg angle
λ: X-ray wavelength

In addition, with reference to the structure analysis of the crystalline polymer material by the scattering method in NICHIAS Technical Journal (2014) Issue 2, No. 365, the scattering intensity profile I(q) was subjected to Fourier transformation according to the following Equation (3) to calculate the electron density correlation function γ(r). γ(r) has special properties that can be directly used for characterizing the structure, and the noncrystalline thickness (da) of the biaxially oriented polypropylene film obtained as the structure information was calculated. In addition, r indicates a distance (nm).

[Equation 1]

$$\gamma(r) = \frac{1}{2\pi^2} \int_0^\infty I(q) q^2 \cos(qr) dq \qquad (3)$$

In addition, a value obtained by subtracting the noncrystalline thickness (da) from the crystal long period (d) was calculated as the crystal thickness (dc).

(8) Differential scanning calorimetry of biaxially oriented polypropylene film

A test piece of about 5.0 mg was cut out from the biaxially oriented polypropylene film. Next, the sample was subjected to a differential scanning calorimetry (1st Run) which consists of a process of raising the temperature from -50°C to 250°C at a temperature rising rate of 5°C/min and a process of lowering the temperature from 250°C to -50°C at a temperature falling rate of 5°C/min, in a nitrogen stream, using a differential scanning calorimeter (product name: Q200 DSC, manufactured by TA Instruments).

From the obtained DSC curve, a main melting point (°C), a melting calorie ΔH (J/g) of the entire film, and a melting calorie ΔH (J/g) at 165°C or lower were respectively obtained. Here, the peak temperature of the maximum melting peak of the DSC curve was defined as the main melting point.

The melting calorie ΔH (J/g) of the entire film was calculated from the melting peak surface area of the DSC curve in conformity with JIS K 7122: 1987 (however, the temperature rising rate was set to 5 °C/min). In a case where a plurality of melting peaks appeared in the DSC curve, the total area of the plurality of melting peaks was defined as the melting calorie (ΔH) of the entire film.

The melting calorie ΔH (J/g) at 165°C or lower is the melting calorie in a range of 165°C or lower in the melting calorie ΔH (J/g) of the entire film.

Next, a crystal ratio (%) at 165°C or lower, a degree of crystallinity (%), a noncrystallinity (%), and a crystallization amount at 165°C or lower were obtained from the following equations, respectively.

As the melting heat of the polypropylene perfect crystal used for the calculation, 209 J/g described in Macromolecular Chemie, Rapid Communication, Vol. 9, p. 75 (1988) was used.

Crystal ratio (%) at 165°C or lower = 100 × melting calorie ΔH (J/g) at 165°C or lower/melting calorie ΔH (J/g) of entire film Degree of crystallinity (%) = 100 × melting calorie ΔH (J/g) of entire film/melting calorie of perfect crystal of polypropylene (209 J/g)

Noncrystallinity (%) = 100 - degree of crystallinity (%)

Crystallization amount (%) at 165°C or lower = Degree of crystallinity (%) × Crystal ratio (%) at 165°C or lower/100

(9) Water vapor permeability

The biaxially oriented polypropylene film was folded back such that the surface resin layer 1 was the inner surface, and two sides were heat-sealed to form a bag shape. Then, calcium chloride was put in as a content. Next, the other side was heat-sealed to produce a bag having a surface area of 0.01 m$^2$. Next, the obtained bag was stored for 72 hours under the conditions of 40°C and a humidity of 90 %RH. The mass of calcium chloride before and after storage was measured, and the water vapor permeability (g/(m$^2$·24h)) was calculated from the difference.

(10) Thermal expansion coefficient and thermal shrinkage rate of biaxially oriented polypropylene film at 120°C

The thermal expansion coefficient and the thermal shrinkage rate of the biaxially oriented polypropylene film at 120°C were measured in conformity with JIS C2151:2019.

First, a test piece of 10 cm × 10 cm was cut out from the biaxially oriented polypropylene film. Next, the test piece was subjected to a heat treatment at 120°C for 15 minutes. In this case, the test piece was suspended and heated in a hot air circulation type constant-temperature tank (manufactured by ADVANTEC, product name: DRM620DE) in a state where no force was applied. Next, the test piece was cooled to room temperature, and then the length of the test piece was measured. Next, the length of the test piece in the TD direction after the heat treatment was defined as $TD_1$ [cm], and the thermal expansion coefficient [%] in the TD direction was calculated by $100 \times (TD_1 - 10)/10$. In addition, the length of the test piece in the MD direction after the heat treatment was defined as $MD_1$ [cm], and the thermal shrinkage rate [%] in the MD direction was calculated by $100 \times (10 - MD_1)/10$. The above measurement was performed three times, and the average value of the obtained measured values was adopted as the thermal expansion coefficient and the thermal shrinkage rate of the biaxially oriented polypropylene film at 120°C, respectively.

(11) Thermal shrinkage rate of biaxially oriented polypropylene film at 150°C

The thermal shrinkage rate of the biaxially oriented polypropylene film at 150°C was measured in conformity with JIS C2151:2019.

First, a test piece of 10 cm × 10 cm was cut out from the biaxially oriented polypropylene film. Next, the test piece was subjected to a heat treatment at 150°C for 15 minutes. In this case, the test piece was suspended and heated in a hot air circulation type constant-temperature tank (manufactured by ADVANTEC, product name: DRM620DE) in a state where no force was applied. Next, the test piece was cooled to room temperature, and then the length of the test piece was measured. Next, in a case where the length of the test piece in the TD direction after the heat treatment is denoted by $TD_1$ [cm] and the length of the test piece in the MD direction after the heat treatment is denoted by $MD_1$ [cm], $X_{TD}$ [%] is calculated by $100 \times (10 - TD_1)/10$, and $X_{MD}$ [%] is calculated by $100 \times (10 - MD_1)/10$. The above measurement was carried out three times, and the average value of the obtained measured values was adopted as the thermal shrinkage rate of the biaxially oriented polypropylene film at 150°C.

(12) Haze

The haze of the biaxially oriented polypropylene film was measured using a haze meter (manufactured by Nippon Denshoku Industries Co., Ltd., NDH5000) in conformity with JIS K7136:2000.

(13) Thermal fusion strength at 170°C or 200°C

The surface resin layers 1 (heat resistance fusion layer) of two biaxially oriented polypropylene films cut into a width of 15 mm were heat-fused under conditions of 170°C or 200°C, a pressure of 2.0 kgf, and a sealing time of 1.0 second to obtain respectively laminated film. Next, two biaxially oriented polypropylene films were peeled off under conditions of a width of 15 mm, peeling angle of 90 degrees, a peeling speed of 300 mm/min, and tensile strength in the TD direction, and each peeling strength at that time was defined as a thermal fusion strength at 170°C or 200°C.

(14) Bag-making properties (presence or absence of wrinkles during heat sealing at 180°C)

The surface resin layer 1 (heat resistant fusion layer) of two biaxially oriented polypropylene films cut into a width of 15 mm were heat-fused under conditions of 180°C, a pressure of 2.0 kgf, and a sealing time of 1.0 second to obtain respectively laminated film. Next, the presence or absence of thermal wrinkles in the sealing portion was visually observed.

(15) Thermal dimensional stability

Thermal dimensional stability of the biaxially oriented polypropylene film was evaluated according to the following standards.

EP 4 596 610 A1

AA (very good) : The thermal shrinkage rate $(X_{MD} + X_{TD})$ at 150°C is less than 5.0%
A (good): The thermal shrinkage rate $(X_{MD} + X_{TD})$ at 150°C is equal to or more than 5.0% and less than 6.0%
B (poor): The thermal shrinkage rate $(X_{MD} + X_{TD})$ at 150°C is equal to or more than 6.0% and less than 7.0%
C (very poor): The thermal shrinkage rate $(X_{MD} + X_{TD})$ at 150°C is equal to or more than 7.0%

[Examples 1 to 6 and Comparative Example 1]

A polypropylene film was extruded and molded with the composition shown in Table 1, and then subjected to a biaxial stretching treatment to produce a biaxially oriented polypropylene film, and each evaluation was performed. The extrusion molding conditions and the biaxial stretching treatment conditions are as follows. In addition, a corona treatment was performed on the surface of the surface resin layer 2 side in Table 1.

Extrusion molding machine: 60 mm$\varphi$ multilayer T-die extrusion molding machine (screw: L/D = 27, manufactured by Screw Engineering Co., Ltd.)
Extrusion setting temperature: 230°C to 250°C, processing speed: 20 m/min (winding speed)
Stretching temperature in MD direction [°C]: shown in Table 1
Stretching ratio in MD direction [times]: shown in Table 1
Stretching temperature in TD direction [°C]: shown in Table 1
Stretching ratio in TD direction [times]: shown in Table 1
Relaxation rate [%]: shown in Table 1

Here, the relaxation rate indicates the maximum stretching width on the device setting ÷ the tenter outlet width.
In addition, the notation "A/B/C" of the stretching temperature in Table 1 means "preheating temperature (temperature at which the film original material before stretching is heated)/stretching temperature (temperature during stretching)/thermal fixation temperature (temperature during thermal fixation (annealing) after stretching)".

[Table 1]

Table 1

| | | Example 1 | Example 2 | Example 3 | Example 4 | Example 5 | Example 6 | Comparative Example 1 |
|---|---|---|---|---|---|---|---|---|
| Surface resin layer 1 (non-corona-treated surface) | Type | h-PP1=100 (% by mass) | h-PP1=100 (% by mass) | h-PP1=100 (% by mass) | h-PP1=100 (% by mass) | h-PP1=100 (% by mass) | h-PP1=100 (% by mass) | h-PP1=100 (% by mass) |
| | Thickness [μm] | 2 | 2 | 2 | 2 | 2 | 2 | 2 |
| Biaxially oriented film layer | Type | h-PP1/r-PP1=86/14 (% by mass) | h-PP1/r-PP1=88/12 (% by mass) | h-PP1/r-PP1=97/3 (% by mass) | h-PP1/BPR1=95/5 (% by mass) | h-PP1/BPR1=90/10 (% by mass) | h-PP1/BPR1=80/20 (% by mass) | h-PP1=100 (% by mass) |
| | Thickness [μm] | 16 | 16 | 16 | 16 | 16 | 16 | 16 |
| Surface resin layer 2 (corona-treated surface) | Type | h-PP1=100 (% by mass) | h-PP1=100 (% by mass) | h-PP1=100 (% by mass) | h-PP1=100 (% by mass) | h-PP1=100 (% by mass) | h-PP1=100 (% by mass) | h-PP1=100 (% by mass) |
| | Thickness [μm] | 2 | 2 | 2 | 2 | 2 | 2 | 2 |
| Entire thickness [μm] | | 20 | 20 | 20 | 20 | 20 | 20 | 20 |
| Content of constitutional unit derived from α-olefin other than propylene [% by mole] | | 0.7 | 0.6 | 0.1 | 3.6 | 7.1 | 14.2 | 0.0 |
| Biaxial stretching treatment conditions of film | Stretching temperature in MD direction [°C] | 125/133/133 | 125/133/133 | 125/133/133 | 130/135/135 | 130/135/135 | 130/135/135 | 125/133/133 |
| | Stretching ratio in MD direction [times] | 4.6 | 4.6 | 4.6 | 4.6 | 4.6 | 4.6 | 4.6 |
| | Stretching temperature in TD direction [°C] | 178/167/180 | 178/167/180 | 178/167/180 | 178/167/180 | 178/167/180 | 178/167/180 | 178/167/180 |
| | Stretching ratio in TD direction [times] | 9.3 | 9.3 | 9.3 | 9.3 | 9.3 | 9.3 | 9.3 |
| | Relaxation rate [%] | 8.1 | 8.1 | 8.1 | 8.1 | 8.1 | 8.1 | 8.1 |
| Tensile modulus | $T_1$ [MPa] | 2453 | 2433 | 2536 | 2115 | 1996 | 1581 | 2594 |
| | $T_2$ [MPa] | 4408 | 4329 | 4713 | 4049 | 3556 | 2557 | 4969 |
| | $T_1 + T_2$ [MPa] | 6861 | 6762 | 7249 | 6164 | 5502 | 4138 | 7563 |

(continued)

| | | Example 1 | Example 2 | Example 3 | Example 4 | Example 5 | Example 6 | Comparative Example 1 |
|---|---|---|---|---|---|---|---|---|
| SAXS measurement | Crystal long period $S_1$ in MD direction [nm] | 15.2 | 16.0 | 15.5 | 15.2 | 14.4 | 15.2 | 16.9 |
| | Crystal long period $S_2$ in TD direction [nm] | 27.6 | 27.4 | 27.6 | 26.7 | 19.0 | 12.3 | 28.2 |
| | $S_1 + S_2$ [nm] | 42.8 | 43.4 | 43.1 | 41.9 | 33.4 | 27.5 | 45.1 |
| | Noncrystalline thickness $S_3$ in MD direction [nm] | 8.2 | 8.6 | 8.3 | 8.2 | 7.7 | 7.8 | 9.1 |
| | Noncrystalline thickness $S_4$ in TD direction [nm] | 15.0 | 14.7 | 14.9 | 14.5 | 10.3 | 6.3 | 15.3 |
| | $S_3 + S_4$ [nm] | 23.2 | 23.3 | 23.2 | 22.7 | 18.0 | 14.1 | 24.4 |
| | Crystal thickness $S_5$ in MD direction [nm] | 7.0 | 7.4 | 7.2 | 7.0 | 6.7 | 7.4 | 7.8 |
| | Crystal thickness $S_6$ in MD direction [nm] | 12.6 | 12.7 | 12.7 | 12.2 | 8.7 | 6.0 | 12.9 |
| | $S_5 + S_6$ [nm] | 19.6 | 20.1 | 19.9 | 19.2 | 15.4 | 13.4 | 20.7 |
| DSC characteristics | Main melting point (°C) | 172 | 170 | 171 | - | - | - | - |
| | Melting calorie ΔH of entire film [J/g] | 119 | 121 | 126 | - | - | - | - |
| | ΔH at 165°C or lower [J/g] | 56 | 58 | 53 | - | - | - | - |
| | Crystal ratio at 165°C or lower [%] | 47 | 48 | 42 | - | - | - | - |
| | Degree of crystallinity [%] | 57 | 58 | 60 | - | - | - | - |
| | Noncrystallinity (%) | 43 | 42 | 40 | - | - | - | - |
| | Crystallization amount at 165°C or lower [%] | 27 | 28 | 26 | - | - | - | - |

| | | Example 1 | Example 2 | Example 3 | Example 4 | Example 5 | Example 6 | Comparative Example 1 |
|---|---|---|---|---|---|---|---|---|
| Thermal expansion coefficient in TD direction at 120°C | [%] | 0.7 | 0.6 | 0.6 | 0.6 | 0.7 | 0.5 | 0.2 |
| Thermal shrinkage rate in MD direction at 120°C | [%] | 2.0 | 1.7 | 1.8 | 2.0 | 1.9 | 0.8 | 2.0 |
| Thermal shrinkage rate at 150°C | $X_{MD}$ [%] | 5.2 | 5.0 | 4.8 | 4.9 | 4.6 | 2.6 | 5.0 |
| | $X_{TD}$ [%] | 0.7 | 0.2 | 0.8 | 0.8 | 0.0 | 0.1 | 2.1 |
| | $X_{MD} + X_{TD}$ [%] | 5.9 | 5.2 | 5.6 | 5.7 | 4.6 | 2.7 | 7.1 |
| Haze [%] | | 0.7 | 0.7 | 0.9 | 0.8 | 0.9 | 2.0 | 0.9 |
| Water vapor permeability [g/(m²· 24h)] | | 5.9 | 6.0 | 5.5 | 7.1 | 7.4 | 10.7 | 6.0 |
| Thermal fusion strength at 200°C [N/15mm] | | 1.0 | 1.2 | 1.1 | 1.1 | 0.9 | 0.1 | 1.0 |
| Thermal fusion strength at 170°C [N/15mm] | | 0.1 | 0.1 | 0.1 | 0.1 | 0.1 | 0.1 | 0.1 |
| Thermal dimensional stability [-] | | A | A | A | A | AA | AA | C |
| Bag-making properties (presence or absence of wrinkles during heat sealing at 180°C) | | Absence | Absence | Absence | Absence | Absence | Absence | Absence |

EP 4 596 610 A1

The biaxially oriented polypropylene film of Examples had improved thermal dimensional stability as compared with the biaxially oriented polypropylene film of comparative examples.

This application has priority based on Japanese application Japanese Patent Application No. 2022-155360, Japanese Patent Application No. 2022-155356, Japanese Patent Application 2022-155359, Japanese Patent Application No. 2022-155365, and Japanese Patent Application No. 2022-155368 filed on September 28, 2022, and the contents thereof are all incorporated herein.

The present invention can also adopt the following aspects.

[1a] A biaxially oriented polypropylene film including:

a biaxially oriented film layer containing a propylene-based polymer,
in which a crystal ratio at 165°C or lower, which is obtained by differential scanning calorimetry, is equal to or more than 38%.

[2a] The biaxially oriented polypropylene film according to [1a], in which a main melting point of the biaxially oriented polypropylene film, which is obtained by differential scanning calorimetry, is equal to or higher than 165°C and equal to or lower than 180°C.

[3a] The biaxially oriented polypropylene film according to [1a] or [2a], in which a melting calorie ($\Delta H$) of an entire film of the biaxially oriented polypropylene film, which is obtained by differential scanning calorimetry, is equal to or more than 110 J/g and equal to or less than 150 J/g.

[4a] The biaxially oriented polypropylene film according to any one of [1a] to [3a], in which a melting calorie ($\Delta H$) of the biaxially oriented polypropylene film at 165°C or lower, which is obtained by differential scanning calorimetry, is equal to or more than 40 J/g.

[5a] The biaxially oriented polypropylene film according to any one of [1a] to [4a], in which a crystallinity of the biaxially oriented polypropylene film at 165°C or lower, which is obtained by differential scanning calorimetry, is equal to or more than 20%.

[6a] The biaxially oriented polypropylene film according to any one of [1a] to [5a], in which a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

[7a] The biaxially oriented polypropylene film according to any one of [1a] to [6a], further including a surface resin layer on at least one surface of the biaxially oriented film layer.

[8a] The biaxially oriented polypropylene film according to [7a], in which the surface resin layer contains a homopolypropylene (A).

[9a] The biaxially oriented polypropylene film according to [8a], in which a content of the homopolypropylene (A) in the surface resin layer is equal to or more than 75% by mass and equal to or less than 100% by mass in a case where the entire surface resin layer is set to 100% by mass.

[10a] The biaxially oriented polypropylene film according to any one of [7a] to [9a], in which a thickness of the surface resin layer is equal to or more than 0.1 μm and equal to or less than 10.0 μm.

[11a] The biaxially oriented polypropylene film according to any one of [1a] to [10a], in which a thickness of the biaxially oriented film layer is equal to or more than 5 μm and equal to or less than 100 μm.

[12a] The biaxially oriented polypropylene film according to any one of [1a] to [11a], in which a total value ($T_1 + T_2$) of a tensile modulus $T_1$ in an MD direction and a tensile modulus $T_2$ in a TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

[13a] The biaxially oriented polypropylene film according to any one of [1a] to [12a], in which the biaxially oriented polypropylene film expands in a TD direction after a heat treatment at 120°C for 15 minutes in conformity with JIS C2151: 2019.

[14a] The biaxially oriented polypropylene film according to any one of [1a] to [13a], in which the biaxially oriented polypropylene film is a packaging film for food.

[15a] A packaging body for food formed of the biaxially oriented polypropylene film according to any one of [1a] to [14a].

[16a] A food packaging body including the packaging body for food according to [15a]; and food in the packaging body for food.

The present invention can also adopt the following aspects.

[1b] A biaxially oriented polypropylene film including:

a biaxially oriented film layer containing a propylene-based polymer,
in which the biaxially oriented polypropylene film expands in a TD direction and contracts in an MD direction in a case of being subjected to a heat treatment at 120°C for 15 minutes, in conformity with JIS C2151: 2019.

[2b] The biaxially oriented polypropylene film according to [1b], in which a thermal expansion coefficient in the TD direction is equal to or more than 0.1% and equal to or less than 2.0% after heat treatment at 120°C for 15 minutes, in conformity with JIS C2151: 2019.

[3b] The biaxially oriented polypropylene film according to [1b] or [2b], in which a thermal shrinkage rate in an MD direction after heat treatment at 120°C for 15 minutes is equal to or less than 5.0%, in conformity with JIS C2151: 2019.

[4b] The biaxially oriented polypropylene film according to any one of [1b] to [3b], in which a thermal shrinkage rate in the TD direction after heat treatment at 150°C for 15 minutes is equal to or less than 8.5%, in conformity with JIS C2151: 2019.

[5b] The biaxially oriented polypropylene film according to any one of [1b] to [4b], in which a thermal shrinkage rate in the MD direction after heat treatment at 150°C for 15 minutes is equal to or less than 8.0%, in conformity with JIS C2151: 2019.

[6b] The biaxially oriented polypropylene film according to any one of [1b] to [5b], in which in a case where a thermal shrinkage rate in the TD direction and a thermal shrinkage rate in the MD direction after heat treatment at 150°C for 15 minutes are respectively defined as $X_{TD}$ [%] and $X_{MD}$ [%], $X_{TD} + X_{MD}$ is less than 16.0%, in conformity with JIS C2151: 2019.

[7b] The biaxially oriented polypropylene film according to any one of [1b] to [6b], in which a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

[8b] The biaxially oriented polypropylene film according to any one of [1b] to [7b], further including a surface resin layer on at least one surface of the biaxially oriented film layer.

[9b] The biaxially oriented polypropylene film according to [8b], in which the surface resin layer contains a homopolypropylene (A).

[10b] The biaxially oriented polypropylene film according to [9b], in which a content of the homopolypropylene (A) in the surface resin layer is equal to or more than 75% by mass and equal to or less than 100% by mass in a case where the entire surface resin layer is set to 100% by mass.

[11b] The biaxially oriented polypropylene film according to any one of [8b] to [10b], in which a thickness of the surface resin layer is equal to or more than 0.1 $\mu$m and equal to or less than 10.0 $\mu$m.

[12b] The biaxially oriented polypropylene film according to any one of [1b] to [11b], in which a thickness of the biaxially oriented film layer is equal to or more than 5 $\mu$m and equal to or less than 100 $\mu$m.

[13b] The biaxially oriented polypropylene film according to any one of [1b] to [12b], in which a total value ($T_1 + T_2$) of a tensile modulus $T_1$ in the MD direction and a tensile modulus $T_2$ in the TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

[14b] The biaxially oriented polypropylene film according to any one of [1b] to [13b], in which the biaxially oriented polypropylene film is a packaging film for food.

[15b] A packaging body for food formed of the biaxially oriented polypropylene film according to any one of [1b] to [14b].

[16b] A food packaging body including the packaging body for food according to [15b]; and food in the packaging body for food.

The present invention can also adopt the following aspects.

[1c] A biaxially oriented polypropylene film including:

a biaxially oriented film layer containing a propylene-based polymer,
in which a thermal fusion strength in a case where the biaxially oriented polypropylene films are heat-sealed to each other at 200°C is equal to or less than 4.0 N/15 mm.

[2c] The biaxially oriented polypropylene film according to [1c], in which a thermal fusion strength in a case where the biaxially oriented polypropylene films are heat-sealed to each other at 170°C is equal to or less than 1.0 N/15 mm.

[3c] The biaxially oriented polypropylene film according to [1c] or [2c], in which a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

[4c] The biaxially oriented polypropylene film according to any one of [1c] to [3c], further including a surface resin layer on at least one surface of the biaxially oriented film layer.

[5c] The biaxially oriented polypropylene film according to [4c], in which the surface resin layer contains a homopolypropylene (A).

[6c] The biaxially oriented polypropylene film according to [5c], in which a content of the homopolypropylene (A) in the surface resin layer is equal to or more than 75% by mass and equal to or less than 100% by mass in a case where the entire surface resin layer is set to 100% by mass.

[7c] The biaxially oriented polypropylene film according to any one of [4c] to [6c], in which a thickness of the surface resin layer is equal to or more than 0.1 $\mu$m and equal to or less than 10.0 $\mu$m.

[8c] The biaxially oriented polypropylene film according to any one of [1c] to [7c], in which a thickness of the biaxially oriented film layer is equal to or more than 5 $\mu$m and equal to or less than 100 $\mu$m.

[9c] The biaxially oriented polypropylene film according to any one of [1c] to [8c], in which a total value ($T_1 + T_2$) of a tensile modulus $T_1$ in the MD direction and a tensile modulus $T_2$ in the TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

[10c] The biaxially oriented polypropylene film according to any one of [1c] to [9c], in which the biaxially oriented polypropylene film is a packaging film for food.

[11c] A packaging body for food formed of the biaxially oriented polypropylene film according to any one of [1c] to [10c].

[12c] A food packaging body including the packaging body for food according to [11c]; and food in the packaging body for food.

The present invention can also adopt the following aspects.

[1d] A biaxially oriented polypropylene film including:

a biaxially oriented film layer containing a homopolypropylene (A) and at least one polymer (B) selected from the group consisting of a random polypropylene (B1) and an $\alpha$-olefin copolymer (B2), and
an MFR of the polymer (B),
in which the biaxially oriented polypropylene film is measured under a condition of 230°C and a load of 2.16 kg, is equal to or more than 0.01 g/10 min and equal to or less than 30 g/10 min, in conformity with ASTM D1238.

[2d] The biaxially oriented polypropylene film according to [1d], in which a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

[3d] The biaxially oriented polypropylene film according to [1d] or [2d], in which an isotactic mesopentad fraction (mmmm) of the homopolypropylene (A) is equal to or more than 96.0%.

[4d] The biaxially oriented polypropylene film according to any one of [1d] to [3d], in which a content of the polymer (B) is equal to or more than 1% by mass and equal to or less than 50% by mass in a case where a total of the biaxially oriented film layer is set to 100% by mass.

[5d] The biaxially oriented polypropylene film according to any one of [1d] to [4d], in which a melting point of the polymer (B) is equal to or higher than 50°C and equal to or lower than 155°C.

[6d] The biaxially oriented polypropylene film according to any one of [1d] to [5d], in which a weight-average molecular weight (Mw) of the polymer (B) is equal to or more than 100,000 and equal to or less than 1,000,000.

[7d] The biaxially oriented polypropylene film according to any one of [1d] to [6d], in which a weight-average molecular weight (Mw)/number-average molecular weight (Mn) of the polymer (B) is equal to or more than 1.5 and equal to or less than 8.0.

[8d] The biaxially oriented polypropylene film according to any one of [1d] to [7d], in which the $\alpha$-olefin copolymer (B2) includes a random copolymer of propylene and one or two or more kinds of ethylene and $\alpha$-olefins selected from the group consisting of $\alpha$-olefins having carbon atoms equal to or more than 4 and equal to or less than 10.

[9d] The biaxially oriented polypropylene film according to any one of [1d] to [8d], further including a surface resin layer on at least one surface of the biaxially oriented film layer.

[10d] The biaxially oriented polypropylene film according to [9d], in which the surface resin layer contains a homopolypropylene (A).

[11d] The biaxially oriented polypropylene film according to [10d], in which a content of the homopolypropylene (A) in the surface resin layer is equal to or more than 75% by mass and equal to or less than 100% by mass in a case where the entire surface resin layer is set to 100% by mass.

[12d] The biaxially oriented polypropylene film according to any one of [9d] to [11d], in which a thickness of the surface resin layer is equal to or more than 0.1 $\mu$m and equal to or less than 10.0 $\mu$m.

[13d] The biaxially oriented polypropylene film according to any one of [1d] to [12d], in which a thickness of the biaxially oriented film layer is equal to or more than 5 $\mu$m and equal to or less than 100 $\mu$m.

[14d] The biaxially oriented polypropylene film according to any one of [1d] to [13d], in which a total value ($T_1 + T_2$) of a tensile modulus $T_1$ in the MD direction and a tensile modulus $T_2$ in the TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

[15d] The biaxially oriented polypropylene film according to any one of [1d] to [14d], in which the biaxially oriented polypropylene film expands in a TD direction after a heat treatment at 120°C for 15 minutes in conformity with JIS C2151: 2019.

[16d] The biaxially oriented polypropylene film according to any one of [1d] to [15d], in which the biaxially oriented polypropylene film is a packaging film for food.

[17d] A packaging body for food formed of the biaxially oriented polypropylene film according to any one of [1d] to [16d].

[18d] A food packaging body including the packaging body for food according to [17d]; and food in the packaging body for food.

REFERENCE SIGNS LIST

100     biaxially oriented polypropylene film
101     biaxially oriented film layer
103     surface resin layer

**Claims**

1.  A biaxially oriented polypropylene film comprising:

    a biaxially oriented film layer containing a propylene-based polymer,
    wherein a crystal long period in a TD direction, which is obtained from small angle X-ray scattering (SAXS) measurement, is 28.0 nm or less.

2.  The biaxially oriented polypropylene film according to Claim 1,
    wherein a noncrystalline thickness in the TD direction obtained from the SAXS measurement is equal to or less than 15.5 nm.

3.  The biaxially oriented polypropylene film according to Claim 1 or 2,
    wherein a crystal thickness in the TD direction obtained from the SAXS measurement is equal to or less than 13.5 nm.

4.  The biaxially oriented polypropylene film according to any one of Claims 1 to 3,
    wherein a crystal ratio at 165°C or lower, which is obtained by differential scanning calorimetry, is equal to or more than 38%.

5.  The biaxially oriented polypropylene film according to any one of Claims 1 to 4,
    wherein a main melting point of the biaxially oriented polypropylene film, which is obtained by differential scanning calorimetry, is equal to or higher than 165°C and equal to or lower than 180°C.

6.  The biaxially oriented polypropylene film according to any one of Claims 1 to 5,
    wherein a melting calorie ($\Delta$H) of an entire film of the biaxially oriented polypropylene film, which is obtained by differential scanning calorimetry, is equal to or more than 100 J/g and equal to or less than 150 J/g.

7. The biaxially oriented polypropylene film according to any one of Claims 1 to 6,
wherein a melting calorie ($\Delta H$) of the biaxially oriented polypropylene film at 165°C or lower, which is obtained by differential scanning calorimetry, is equal to or more than 40 J/g.

8. The biaxially oriented polypropylene film according to any one of Claims 1 to 7,
wherein a crystallization amount of the biaxially oriented polypropylene film at 165°C or lower is equal to or more than 20%.

9. The biaxially oriented polypropylene film according to any one of Claims 1 to 8,
wherein a content of a constitutional unit derived from an $\alpha$-olefin other than propylene, which is contained in the biaxially oriented polypropylene film, is equal to or more than 0.05% by mole in a case where a total content of constitutional units derived from a monomer, which is contained in the biaxially oriented polypropylene film, is set to 100% by mole.

10. The biaxially oriented polypropylene film according to any one of Claims 1 to 9,
wherein the biaxially oriented polypropylene film expands in a TD direction after heat treatment at 120°C for 15 minutes in conformity with JIS C2151: 2019.

11. The biaxially oriented polypropylene film according to any one of Claims 1 to 10,
wherein the biaxially oriented polypropylene film expands in a TD direction and contracts in an MD direction in a case of being subjected to a heat treatment at 120°C for 15 minutes, in conformity with JIS C2151: 2019.

12. The biaxially oriented polypropylene film according to any one of Claims 1 to 11,
wherein a thermal expansion coefficient in a TD direction is equal to or more than 0.1% and equal to or less than 2.0% after heat treatment at 120°C for 15 minutes, in conformity with JIS C2151: 2019.

13. The biaxially oriented polypropylene film according to any one of Claims 1 to 12,
wherein a thermal shrinkage rate in an MD direction after heat treatment at 120°C for 15 minutes is equal to or less than 5.0%, in conformity with JIS C2151: 2019.

14. The biaxially oriented polypropylene film according to any one of Claims 1 to 13,
wherein a thermal shrinkage rate in a TD direction after heat treatment at 150°C for 15 minutes is equal to or less than 8.5%, in conformity with JIS C2151: 2019.

15. The biaxially oriented polypropylene film according to any one of Claims 1 to 14,
wherein a thermal shrinkage rate in an MD direction after heat treatment at 150°C for 15 minutes is equal to or less than 8.0%, in conformity with JIS C2151: 2019.

16. The biaxially oriented polypropylene film according to any one of Claims 1 to 15,
wherein in a case where a thermal shrinkage rate in a TD direction and a thermal shrinkage rate in an MD direction after a heat treatment at 150°C for 15 minutes are respectively defined as $X_{TD}$ [%] and $X_{MD}$ [%], $X_{TD} + X_{MD}$ is less than 6.0%, in conformity with JIS C2151: 2019.

17. The biaxially oriented polypropylene film according to any one of Claims 1 to 16,
wherein a thermal fusion strength in a case where the biaxially oriented polypropylene films are heat-sealed to each other at 200°C is equal to or less than 4.0 N/15 mm.

18. The biaxially oriented polypropylene film according to any one of Claims 1 to 17,
wherein a thermal fusion strength in a case where the biaxially oriented polypropylene films are heat-sealed to each other at 170°C is equal to or less than 1.0 N/15 mm.

19. The biaxially oriented polypropylene film according to any one of Claims 1 to 18,

wherein the propylene-based polymer includes a homopolypropylene (A) and at least one polymer (B) selected from the group consisting of a random polypropylene (B1) and an $\alpha$-olefin copolymer (B2), and
an MFR of the polymer (B), which is measured under a condition of 230°C and a load of 2.16 kg, is equal to or more than 0.01 g/10 min and equal to or less than 30 g/10 min, in conformity with ASTM D1238.

20. The biaxially oriented polypropylene film according to Claim 19,
wherein an isotactic mesopentad fraction (mmmm) of the homopolypropylene (A) is equal to or more than 96.0%.

21. The biaxially oriented polypropylene film according to Claim 19 or 20,
wherein a content of the polymer (B) is equal to or more than 1% by mass and equal to or less than 50% by mass in a case where a total of the biaxially oriented film layer is set to 100% by mass.

22. The biaxially oriented polypropylene film according to any one of Claims 19 to 21,
wherein a melting point of the polymer (B) is equal to or higher than 50°C and equal to or lower than 155°C.

23. The biaxially oriented polypropylene film according to any one of Claims 19 to 22,
wherein a weight-average molecular weight (Mw) of the polymer (B) is equal to or more than 100,000 and equal to or less than 1,000,000.

24. The biaxially oriented polypropylene film according to any one of Claims 19 to 23,
wherein a weight-average molecular weight (Mw)/number-average molecular weight (Mn) of the polymer (B) is equal to or more than 1.5 and equal to or less than 8.0.

25. The biaxially oriented polypropylene film according to any one of Claims 19 to 24,
wherein the $\alpha$-olefin copolymer (B2) includes a random copolymer of propylene and one or two or more kinds of $\alpha$-olefins selected from the group consisting of ethylene and $\alpha$-olefins having carbon atoms equal to or more than 4 and equal to or less than 10.

26. The biaxially oriented polypropylene film according to any one of Claims 1 to 25, further comprising:
a surface resin layer on at least one surface of the biaxially oriented film layer.

27. The biaxially oriented polypropylene film according to Claim 26,
wherein the surface resin layer contains a homopolypropylene (A).

28. The biaxially oriented polypropylene film according to Claim 27,
wherein a content of the homopolypropylene (A) in the surface resin layer is equal to or more than 75% by mass and equal to or less than 100% by mass in a case where the entire surface resin layer is set to 100% by mass.

29. The biaxially oriented polypropylene film according to any one of Claims 26 to 28,
wherein a thickness of the surface resin layer is equal to or more than 0.1 $\mu$m and equal to or less than 10.0 $\mu$m.

30. The biaxially oriented polypropylene film according to any one of Claims 1 to 29,
wherein a thickness of the biaxially oriented film layer is equal to or more than 5 $\mu$m and equal to or less than 100 $\mu$m.

31. The biaxially oriented polypropylene film according to any one of Claims 1 to 30,
wherein a total value ($T_1 + T_2$) of a tensile modulus $T_1$ in an MD direction and a tensile modulus $T_2$ in a TD direction of the biaxially oriented polypropylene film, which is measured under conditions of a measurement temperature of 23°C $\pm$ 2°C, a relative humidity of 50% $\pm$ 5% RH, and a tensile speed of 5 mm/min using a tensile tester in conformity with JIS K7127 (1999), is equal to or more than 3000 MPa and equal to or less than 10000 MPa.

32. The biaxially oriented polypropylene film according to any one of Claims 1 to 31,
wherein the biaxially oriented polypropylene film is a packaging film for food.

33. A packaging body for food formed of the biaxially oriented polypropylene film according to any one of Claims 1 to 32.

34. A food packaging body comprising:

the packaging body for food according to Claim 33; and
food in the packaging body for food.

[Fig.1]

101 ⌇

100

[Fig.2]

103 ⌇
101 ⌇

100

[Fig.3]

103 ⌇
101 ⌇
103 ⌇

100

## INTERNATIONAL SEARCH REPORT

| International application No. |
| --- |
| **PCT/JP2023/034582** |

### A. CLASSIFICATION OF SUBJECT MATTER

*C08J 5/18*(2006.01)i; *B29C 55/12*(2006.01)i; *B32B 27/00*(2006.01)i; *B32B 27/32*(2006.01)i; *B65D 65/02*(2006.01)i; *B65D 65/40*(2006.01)i; *C08L 23/00*(2006.01)i; *C08L 23/10*(2006.01)i; *C08L 23/12*(2006.01)i

FI:   C08J5/18 CES; B32B27/32 E; B65D65/02 E; C08L23/12; C08L23/00; C08L23/10; B65D65/40 D; B32B27/32 Z; B32B27/00 H; B29C55/12

According to International Patent Classification (IPC) or to both national classification and IPC

### B. FIELDS SEARCHED

Minimum documentation searched (classification system followed by classification symbols)

C08J5/18; B29C55/12; B32B27/00; B32B27/32; B65D65/02; B65D65/40; C08L23/00; C08L23/10; C08L23/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2014-51658 A (TOYOBO CO LTD) 20 March 2014 (2014-03-20) <br> claims, paragraph [0002], examples 1-8, fig. 1-4 | 1-34 |
| Y | JP 2020-128263 A (ASAHI KASEI CORP) 27 August 2020 (2020-08-27) <br> claims, paragraphs [0040]-[0041], examples | 1-34 |
| Y | JP 2020-7443 A (MITSUI CHEMICALS TOHCELLO INC) 16 January 2020 (2020-01-16) <br> paragraphs [0037]-[0041], [0051]-[0063], fig. 1, 2 | 26-28 |
| Y | JP 2020-7445 A (MITSUI CHEMICALS TOHCELLO INC) 16 January 2020 (2020-01-16) <br> paragraphs [0042]-[0046], [0056]-[0068], fig. 1, 2 | 26-28 |
| A | JP 2021-28394 A (TORAY INDUSTRIES, INC.) 25 February 2021 (2021-02-25) <br> claims, examples 1-8 | 1-34 |
| A | JP 2000-273202 A (TOKUYAMA CORP) 03 October 2000 (2000-10-03) <br> claims, examples 1-15 | 1-34 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2023** | **19 December 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/034582**

| Patent document cited in search report | | | Publication date (day/month/year) | Patent family member(s) | | | Publication date (day/month/year) |
|---|---|---|---|---|---|---|---|
| JP | 2014-51658 | A | 20 March 2014 | WO | 2014/024970 | A1 | |
| | | | | TW | 201412778 | A | |
| JP | 2020-128263 | A | 27 August 2020 | WO | 2019/049750 | A1 | |
| | | | | CN | 111032753 | A | |
| | | | | TW | 201945159 | A | |
| JP | 2020-7443 | A | 16 January 2020 | (Family: none) | | | |
| JP | 2020-7445 | A | 16 January 2020 | (Family: none) | | | |
| JP | 2021-28394 | A | 25 February 2021 | WO | 2020/090628 | A1 | |
| | | | | CN | 112888729 | A | |
| | | | | KR | 10-2021-0086617 | A | |
| | | | | TW | 202031462 | A | |
| JP | 2000-273202 | A | 03 October 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008073926 A
- JP 2004082499 A
- JP 2022155360 A
- JP 2022155356 A

- JP 2022155359 A
- JP 2022155365 A
- JP 2022155368 A

**Non-patent literature cited in the description**

- *NICHIAS Technical Journal*, 2014, vol. 2 (365)

- Macromolecular Chemie. *Rapid Communication*, 1988, vol. 9, 75